(19) Europäisches Patentamt
European Patent Office
Office européen des brevets

(11) EP 2 199 844 A1

(12) **EUROPEAN PATENT APPLICATION**
published in accordance with Art. 153(4) EPC

(43) Date of publication:
**23.06.2010 Bulletin 2010/25**

(21) Application number: **08792535.0**

(22) Date of filing: **19.08.2008**

(51) Int Cl.:
***G02C 7/02*** (2006.01) ***G02B 3/00*** (2006.01)
***G02B 5/23*** (2006.01) ***G02C 7/10*** (2006.01)

(86) International application number:
**PCT/JP2008/064752**

(87) International publication number:
**WO 2009/025272 (26.02.2009 Gazette 2009/09)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **23.08.2007 JP 2007217321**
**26.09.2007 JP 2007249733**

(71) Applicant: **Hoya Corporation**
**Tokyo 161-8525 (JP)**

(72) Inventors:
- **OHTA, Hiroshi**
  **Tokyo 161-8525 (JP)**
- **HASHIMOTO, Toshikazu**
  **Tokyo 161-8525 (JP)**
- **IMIZU, Takeshi**
  **Tokyo 161-8525 (JP)**

(74) Representative: **Albrecht, Thomas**
**Kraus & Weisert**
**Patent- und Rechtsanwälte**
**Thomas-Wimmer-Ring 15**
**80539 München (DE)**

# (54) PLASTIC LENS MANUFACTURING METHOD

(57) The present invention relates to a method of manufacturing a plastic lens comprising forming a resin layer on a surface of a plastic lens substrate. The method of manufacturing a plastic lens of the present invention comprises coating a water-based coating liquid comprising a resin component and a water-based solvent by discharging the water-based coating liquid from a tip of a nozzle onto the surface of the plastic lens substrate being rotated with the surface facing upward, so that a spiral coating path is traced from a perimeter portion to a center portion of the surface as well as so that adjacent coating paths in a radial direction of the surface contact or overlap each other, and forming the resin layer by rotating the plastic lens substrate after the coating with the surface on which the coating liquid has been coated facing upward to remove at least a portion of the water-based solvent comprised in the coating liquid.

EP 2 199 844 A1

## Description

CROSS-REFERENCE TO RELATED APPLICATIONS

This application claims the benefit of priority to Japanese Patent Application No. 2007-217321 filed on August 23, 2007 and Japanese Patent Application No. 2007-249733 filed on September 26, 2007, which are expressly incorporated herein by reference in their entirety.

TECHNICAL FIELD

The present invention relates to a method of manufacturing a lens with a resin layer, and more particularly, to a method of manufacturing a lens that is capable of providing a lens having a resin layer of uniform thickness by coating and drying a water-based polymer solution on a lens.

BACKGROUND TECHNIQUE

Coating films are formed on lenses such as eyeglass lenses to impart various functions. Dipping and spin coating methods are widely employed to form coating films. However, the spin coating method is generally known to be advantageous in forming coating films of uniform thickness (for example, see Japanese Unexamined Patent Publication (KOKAI) Heisei No. 5-19103, which is expressly incorporated herein by reference in its entirety).

In the common spin coating method, a coating liquid is applied dropwise to the center of the surface of a rotating lens, and centrifugal force is used to spread the coating liquid, thus applied in the form of drops, over the entire surface of the lens to be coated. However, as the viscosity of the coating liquid increases, it becomes difficult to adequately spread the coating liquid by centrifugal force. Accordingly, the applicant of the present application proposed that the position and displacement path of the nozzle discharging the coating liquid be determined based on data relating to the shape of the object being coated, such as a lens, to uniformly apply a highly viscous coating liquid by spin coating (see Japanese Unexamined Patent Publication (KOKAI) No. 2005-218994, which is expressly incorporated herein by reference in its entirety). This method is suitable as a method of thickly applying a highly viscous coating liquid, such as a coating liquid having photochromic properties, on an object being coated.

The methods described in the above two publications primarily target non-water-based coating liquids, such as monomer solutions that are polymerized and cured by heating, exposure to UV radiation, and the like. By contrast, the present inventors considered the adoption of spin coating as a method of forming coating films by scattering water after applying a polymerized water-dispersible coating liquid on a plastic lens. Such coating liquid affords the advantages of permitting film formation without a heating step and of releasing the solvent. However, as a result of research, the present inventors encountered the following problems in forming coating layers by spin coating using the above water-based coating liquid:

(1) Since a water-based coating liquid poorly wets the surface of a plastic lens, the coating liquid that is discharged from the nozzles ends up being repelled by the rotating lens, making it difficult to apply the coating liquid over the entire surface.

(2) In spin coating, the water-based coating liquid that is applied dropwise to the lens surface is solidified by eliminating (scattering) the water-based solvent by centrifugal force. Since dispersal and solidification of the coating liquid on the surface of the lens take place simultaneously due to centrifugal force, there are problems in that:

(i) traces where the coating liquid has dispersed on the surface of the coating film remain following solidification, diminishing the smoothness of the surface; and (ii) the coating liquid tends not to uniformly spread over the entire surface of the lens, thereby rendering the film thickness nonuniform. These problems intensify as the viscosity of the coating liquid (the solid portion) increases. Accordingly, it is conceivable to increase the solvent to lower the viscosity of the coating liquid. However, when the water-based solvent is increased, the ability of the coating liquid to wet the surface of the plastic lens ends up further deteriorating.

DISCLOSURE OF THE INVENTION

Accordingly, it is an object of the present invention to provide a means of manufacturing a plastic lens having a uniform coating film by applying a water-based coating liquid by spin coating to the surface of a plastic lens.

The present inventors conducted extensive research into achieving the above object, resulting in the following discovery.

In common spin coating, a coating liquid is applied dropwise to the center of the surface of a rotating lens and centrifugal force is used to spread the coating liquid that has been applied dropwise over the entire surface of the lens. However,

as set forth above, it is difficult to form a uniform coating film by application by the above method due to the problem of wettability by the water-based coating liquid. Accordingly, the present inventors applied the coating liquid in a spiral to the surface of a lens while the lens was being rotated. However, research by the present inventors revealed that this method presented the following new problems:

(1) When a spiral coating path was traced from the center to the perimeter of the lens (from the inside to the outside thereof), centrifugal force caused more coating liquid to be applied over the coating liquid that was being spread toward the perimeter portion by centrifugal force on portions of the rotating lens that had already been coated. As the coating liquid that had been applied on the center portion spread toward the perimeter portion during rotation, the water-based solvent scattered and solidification progressed. Thus, when more coating liquid was applied over coating liquid that was dispersing to the outside in a state where the concentration of the solid portion was high, uniformity was lost in the coating layer.

(2) It was still difficult to cover gaps that were present in the spiral coating path, even when subsequent rotation caused the coating liquid to disperse onto them. This was attributed to poor wettability of the lens surface by the coating liquid.

The present inventors conducted further extensive research to solve the above-described new problems. As a result, they discovered that by coating a water-based coating liquid so that a spiral coating path is traced from a perimeter portion to a center portion of the surface of a lens as well as so that adjacent coating paths in a radial direction of the lens contact or overlap each other, and also by forming a resin layer by rotating the lens after the coating with the surface on which the coating liquid has been coated facing upward to remove at least a portion of the water-based solvent comprised in the coating liquid, achieving the above-stated object. The present invention was devised on that basis.

The present invention relates to a method of manufacturing a plastic lens comprising forming a resin layer on a surface of a plastic lens substrate, which comprises:

coating a water-based coating liquid comprising a resin component and a water-based solvent by discharging the water-based coating liquid from a tip of a nozzle onto the surface of the plastic lens substrate being rotated with the surface facing upward, so that a spiral coating path is traced from a perimeter portion to a center portion of the surface as well as so that adjacent coating paths in a radial direction of the surface contact or overlap each other, and forming the resin layer by rotating the plastic lens substrate after the coating with the surface on which the coating liquid has been coated facing upward to remove at least a portion of the water-based solvent comprised in the coating liquid.

According to one embodiment, the above forming of the resin layer may comprise a first rotating step in which the plastic lens substrate after the coating is rotated with the surface on which the coating liquid has been coated facing upward and a second rotating step in which the plastic lens substrate after the first rotating step is rotated, with the surface on which the coating liquid has been coated facing upward, at a rotational speed exceeding a maximum rotational speed in the first rotating step, and the second rotating step may be begun after at least an outermost surface of the water-based coating liquid that has been coated on the surface has dried.

According to one embodiment, the maximum rotational speed in the second rotating step may be set within a range of 2 to 5-fold the maximum rotational speed in the first rotating step.

According to one embodiment, the viscosity of the coating liquid may range from 10 to 200 CPS.

According to one embodiment, the coating liquid may be discharged from the tip of the nozzle at a discharge rate ranging from 200 to 4693 mm/sec.

According to one embodiment, at least one from among the group consisting of a quantity of the coating liquid that is discharged from the tip of the nozzle, a displacement rate of the nozzle, and a rotational speed of the plastic lens substrate may be controlled so that a quantity of the coating liquid coated per unit area on the surface is approximately rendered uniform.

According to one embodiment, the method of manufacturing a plastic lens of the present invention may comprise horizontally displacing the nozzle discharging the coating liquid from an area above the perimeter portion toward an area above the center portion of the surface.

According to one embodiment, the rate of displacement of the nozzle may be continuously increased or increased in stages.

According to one embodiment, the rotational speed of the plastic lens substrate during the coating may be continuously increased or increased in stages.

According to one embodiment, the resin component may be a polyurethane resin.

According to one embodiment, the surface may be a convex surface comprising a curved surface with a surface

curvature ranging from -8 to +8.

According to one embodiment, the plastic lens may be an eyeglass lens.

According to one embodiment, the method of manufacturing a plastic lens of the present invention may further comprise forming a coating film on the resin layer.

According to one embodiment, the resin layer may be an adhesive layer.

According to one embodiment, the coating film may be a photochromic film.

The present invention can form a coating film with an excellent surface smoothness by uniformly coating a water-based coating liquid on a plastic lens.

BEST MODE FOR CARRYING OUT THE INVENTION

The present invention relates to a method of manufacturing a plastic lens comprising forming a resin layer on a surface of a plastic lens substrate (also referred to as "Aspect I" hereinafter). The method of manufacturing a plastic lens of the present invention comprises: (1) coating a water-based coating liquid comprising a resin component and a water-based solvent by discharging the water-based coating liquid from a tip of a nozzle onto the surface of the plastic lens substrate being rotated with the surface facing upward, so that a spiral coating path is traced from a perimeter portion to a center portion of the surface as well as so that adjacent coating paths in a radial direction of the surface contact or overlap each other, and (2) forming the resin layer by rotating the plastic lens substrate after the coating with the surface on which the coating liquid has been coated facing upward to remove at least a portion of the water-based solvent comprised in the coating liquid. That is, the method of manufacturing a plastic lens of the present invention comprises a coating step of coating a water-based coating liquid on the surface of a plastic lens substrate and a rotating step of rotating the plastic lens substrate after the coating step. In the coating step, after coating the coating liquid over the entire surface of the plastic lens substrate without gaps, the thickness of the film is rendered uniform and the coating liquid is solidified in the subsequent rotating step, thereby permitting the formation of a resin layer of uniform film thickness and excellent surface smoothness on the plastic lens substrate.

A water-based coating liquid that is solidified by removing the solvent is employed in the present invention. The farther to the outside that the coating liquid is applied, the greater its constant speed relative to the air and the greater the tendency of volatile components to evaporate. Thus, the coating liquid that is applied to the perimeter portion in particular will completely solidify before the coating step is completed, or fluidity will be nearly lost in case that it is still not solidified. In such a state, it is difficult to render the film thickness uniform even when a rotating step is conducted following the coating step. Accordingly, by conducting coating in the present invention so that adjacent portions of the spiral coating path either contact or overlap, new solution that has not yet dried is fed onto the perimeter portion of the coated surface first, thereby suppressing solidification. Thus, the thickness of the film can be rendered uniform and a smooth surface can be achieved in the rotating step following the coating step. When gaps are present between adjacent paths, due to the poor wettability of the lens surface by the coating liquid, the coating liquid that has spread tends not to cover the gaps in the rotating step following the coating step even when the coating liquid spreads from the center portion to the perimeter portion. By contrast, the present invention permits the formation of a uniform resin layer free of coating nonuniformities by conducting coating without gaps. In the present invention, the term "resin layer" refers to a layer comprising a resin component, such as a layer comprising equal to or greater than 5 mass percent of a resin component. The "resin component" does not include polymerizable components that are polymerized by heat or UV radiation. In the present invention, the term "water-based coating liquid" means a coating liquid having the property of being solidified by removal of the water-based solvent contained.

The method of manufacturing a plastic lens of the present invention will be described in greater detail below.

Coating step

In the coating step, a water-based coating liquid is coated on the surface of a rotating plastic lens substrate. The water-based coating liquid is discharged from the tip of a nozzle positioned above a rotating plastic lens substrate the surface of which is facing upward. The coating liquid can be directly coated on the surface of the plastic lens substrate, or can be coated over a layer provided on the plastic lens substrate. The shape of the surface of the plastic lens substrate on which the coating liquid is coated may be convex or concave. However, a convex surface is desirable. A convex surface is desirable in that a resin layer of uniform thickness can be formed without the liquid tending to accumulate around the perimeter. The coating is conducted so that a spiral coating path is traced from a perimeter portion to a center portion of the surface as well as so that adjacent coating paths in a radial direction of the surface contact or overlap each other. A typical diagram of the coating path is shown in Fig. 1, and a partially enlarged typical diagram is shown in Fig. 2.

The perimeter portion of the surface of the plastic lens substrate that serves as the starting point for the coating is , for example, contained in the region from the outer rim of the lens to a region about 10 mm inward therefrom, but

not specifically limited thereto.
The center portion of the surface of the plastic lens substrate serving as the final position of the coating refers to, for example, the geometric center of the lens, the optical center thereof, or the vicinity of this center.
The water-based coating liquid is caused to flow out of the tip of a nozzle toward the surface of the plastic lens substrate in such a manner as to trace a spiral coating path from the above starting point to the final position. Fig. 3 shows an example of a coating device that can be employed in such coating. Detailed descriptions of the coating step will be given below based on Fig. 3. However, the present invention is not limited to the embodiment shown in Fig. 3.

The device shown in Fig. 3 comprises a dispensing system that feeds coating liquid, and a spin coater that causes the surface on which the coating liquid is coated to rotate while facing vertically upward. An embodiment in which coating is conducted with the surface facing vertically upward will be described below. However, it is also possible for the plastic lens substrate to be rotated with the axis of rotation thereof tilted somewhat relative to the vertical. It is desirable for coating to be conducted with the plastic lens substrate facing vertically upward in order to apply a uniform centrifugal force.

The dispensing system is comprised of a dispensing controller, a syringe, and a nozzle. The dispensing controller is capable of controlling the flow rate of the coating liquid through the tip of the nozzle by means of the discharge level. The syringe can be displaced horizontally (in the X axis direction) and in the Z axis direction (vertical direction). For example, variable-rate displacement over certain radial portions of the lens is possible in the X axis direction. The spin coater is controlled by a control element, not shown, and is capable of varying the rotational speed in synchronization with the position of the syringe in the horizontal direction.

The nozzle that discharges the coating liquid is displaced in the horizontal direction (X axis direction) from above the perimeter portion of the surface of the rotating lens substrate toward the area above the center portion to trace a spiral coating path over the surface of the lens substrate. As shown in the right drawing of Fig. 2, the spiral coating path is formed so that adjacent coating paths contact or overlap each other in the radial direction of the lens. That is, coating is conducted so that "coating pitch $P \leq$ coating line width W." The conducting of coating in this fashion can be readily determined visually. The width of the overlapping region of adjacent coating paths is not specifically limited. However, it is undesirable from the perspective of coating efficiency for the overlapping region to account for a large portion of the coating line width. It is thus desirable for the coating conditions to be selected to permit efficient coating.

The coating line width is desirably controlled to trace a coating path so that adjacent paths contact or overlap each other as set forth above. The coating line width is varied primarily based on the rotational speed of the lens substrate. When the flow rate of coating liquid through the tip of the nozzle is made constant, the more rapid the rotational speed of the lens substrate, the narrower the coating line width becomes, and the slower the rotational speed of the lens substrate, the wider the coating line width becomes. Based on research conducted by the present inventors, the coating line width remains nearly constant despite variation in the distance between the tip of the nozzle and surface of the lens substrate. Accordingly, it suffices to displace the nozzle in the horizontal direction (the X axis direction in Fig. 3) above the surface of the lens substrate during coating. Coating can also be conducted by fixing the nozzle in the vertical direction and essentially not moving it, for example, without controlling the position in the vertical direction (the Y axis direction in Fig. 3). Since the position relative to the tip of the nozzle changes when the surface shape of the lens substrate changes, in coating methods in which the position of nozzle displacement is controlled based on the surface shape of the lens substrate, the position of displacement of the nozzle must be determined for the shape of each lens substrate. By contrast, when it becomes unnecessary to control the position of the nozzle in the vertical direction, the position of displacement of the nozzle can be determined irrespective of the surface shape of the lens substrate, permitting the efficient production of multiple types of lenses of different surface shapes.

In the course of conducting coating by displacing the nozzle that discharges coating liquid from its tip from the perimeter portion of the surface of the lens substrate toward the center portion thereof, when the rate of discharge of coating liquid, the rotational speed of the lens substrate, and the rate of displacement of the nozzle are all constant, the relative speed of the lens decreases as the outflow position approaches the center, thereby increasing the quantity of coating liquid that is applied per unit surface area. Since the lens substrate is rotated after the coating step to render the thickness of the coating uniform in the present invention, the subsequent rotating step can render the thickness uniform even when a greater quantity of coating liquid is applied the closer the nozzle approaches to the center portion. However, the application of a large quantity of coating liquid is undesirable from a cost perspective. Accordingly, in the present invention, at least one from among the group consisting of the quantity of coating liquid that is discharged through the tip of the nozzle, the displacement rate of the nozzle, and the rotational speed of the plastic lens substrate is desirably controlled so that the quantity of coating liquid coated per unit area on the surface of the lens substrate is approximately rendered uniform. Thus, a suitable quantity of coating liquid can be employed. Further, since the centrifugal force is smaller in the center portion than at the perimeter portion, with highly viscous coating liquids, the thickness at the center portion tends to be greater than at the perimeter portion. By contrast, by controlling the quantity of coating liquid coated as set forth above, it is possible to prevent the thickness in the center portion from becoming excessive. This is extremely advantageous to the formation of a resin layer of uniform thickness.

In the present invention, it is desirable that the coating line width is measured and a database of coating conditions such as the rotational speed of the lens substrate and the rate of displacement of the nozzle is prepared in advance. This database can then be used to determine coating conditions independently of the shape of the lens substrate.

When the lens substrate is rotated rapidly and the relative speed between the nozzle and the lens substrate (also referred to as the perimeter speed) becomes excessively large, there are cases where the coating liquid flowing out through the tip of the nozzle ends up being repelled by the surface of the lens substrate, making it difficult to deposit (dispense) coating liquid on the lens. Accordingly, the rotational speed of the lens substrate is desirably set so as not to exceed a critical perimeter speed at which dispensing is possible. The perimeter speed at which dispensing is possible can be determined experimentally through preliminary testing. Normally, to conduct good dispensing, the relative speed between the lens surface and the nozzle (perimeter speed) desirably falls within a range of 400 to 3,000 mm/s. The rotational speed of the lens substrate is desirably determined so as not to exceed the critical perimeter speed, and can be about 100 to 1,000 rpm, for example.

In the coating step, when attempting to average out the quantity of coating by means of the rotational speed of the lens substrate, it suffices to increase the rotational speed of the lens substrate. The rotational speed of the lens substrate can be increased continuously or in stages. If the nozzle is being displaced in stages for each prescribed radius, increasing the rotational speed of the lens substrate incrementally while varying the rotational speed of the lens substrate with displacement of the nozzle is effective.

In the coating step, when using the rate of displacement of the nozzle to average out the quantity of coating, it suffices to increase the rate of displacement of the nozzle as it moves from the area above the perimeter portion toward the area above the center portion of the lens substrate surface. The rate of displacement of the nozzle can be continuously increased or increased in stages. For reliable control, it is desirable to increase the rate of displacement of the nozzle in stages for each prescribed radius. If the rate of displacement of the nozzle becomes excessively high, the relative speed between the nozzle and the lens substrate increases as set forth above, making dispensing difficult. Accordingly, the rate of displacement of the nozzle is desirably determined in light of the rotational speed of the lens within a range in which the critical perimeter speed is not exceeded, such as about 1 to 30 mm/s.

When the rate of discharge of coating liquid through the tip of the nozzle in the coating step is excessively low, the coating liquid that flows out ends up being repelled by the surface of the rotating lens substrate, making stable dispensing difficult. To achieve stable dispensing, the rate of discharge of coating liquid through the tip of the nozzle is desirably kept to equal to or higher than 200 mm/s. Additionally, when the rate of discharge is excessively high, a large quantity of coating liquid ends up being coated. Thus, an excessively high rate of discharge is undesirable for the application of a suitable quantity. For the application of a suitable quantity, a discharge rate of equal to or lower than 4,693 mm/s is desirable. The discharge rate is preferably 1,000 to 4,000 mm/s, more preferably falling within a range of 2,500 to 3,500 mm/s. The rate of discharge of coating liquid through the tip of the nozzle can be controlled by means of the inner diameter and discharge level of the discharge nozzle. For example, the inner diameter of the discharge nozzle is desirably such that the inner diameter of the tip of the nozzle is about φ 0.1 to 0.8 mm. The smaller the nozzle diameter, the narrower the coating line width tends to be, so when employing a nozzle of small diameter, it is desirable for the nozzle displacement rate and the rotational speed of the lens to be increased so that adjacent coating paths contact or overlap each other. Since increasing the discharge level and the rate of discharge are undesirable from an economic perspective, it is desirable to employ a nozzle with a narrow diameter and determine the discharge level so that the flow rate can be ensured. The discharge level can be set at about 0.05 to 0.30 g/sec, for example. Although the discharge rate can be used to average out the coating quantity, from the viewpoint of precision, as set forth above, it is desirable to attempt to average out the coating quantity by means of the rate of displacement of the nozzle and/or the rotational speed of the lens substrate.

The method of setting the coating conditions in the coating step will be specifically described next. However, the present invention is not limited to the embodiments described below.

(a) Determining the critical perimeter speed for dispensing

Once the nozzle to be used and the coating liquid to be coated have been determined, coating is conducted on an actual rotating lens substrate surface, preliminary testing is conducted to determine the critical perimeter speed for dispensing, and a graph is plotted that shows the relation between the perimeter speed of the lens substrate and the coating line width. In the graph that is plotted, the maximum perimeter speed at which a coating line width is confirmed is adopted as the critical perimeter speed for dispensing.

(b) Determining the rotational speed at each radius (for example, a pitch of 5 mm) based on the critical perimeter speed permitting dispensing

In the present step, as set forth above, the rotational speed is determined at each radius by taking into account

the critical perimeter speed so that the rotational speed increases as coating progresses from the perimeter portion toward the center portion of the surface of the lens substrate. Specifically, the rotational speed for each radius can be determined based on equation (1) below. In practical terms, it can be cut in units of 100 rpm.

$$\text{Rotational speed of lens substrate X (rpm)} = \text{dropwise critical perimeter speed V (mm/s)} \times 60\ \text{(s)}/(2\pi \times \text{radius R (mm)}) \quad \text{... (1)}$$

For example, for a dropwise critical perimeter speed of 2,000 mm/sec, the rotational speed $X_{40}$ of the lens substrate at a radial position 40 mm from the center of the surface of the lens substrate would be calculated as: rotational speed of lens substrate $X_{40}$ (rpm) = 2,000 x 60 /(2π x 40) = 477.7 (rpm). When cutting in units of 100 rpm, it would be set to 400 rpm.

(c) Calculating the perimeter speed from the rotational speed of the lens substrate at each radius

The rotational speed of the lens substrate can be determined for each radius based on equation (2) below from the rotational speed of the lens substrate determined in (b) above.

$$\text{Perimeter speed V (mm/sec)} = \text{rotational speed of lens substrate X (rpm/60 (s)} \times 2\pi \times \text{radius R (mm))} \quad \text{... (2)}$$

For example, for a lens substrate rotational speed $X_{40}$ (400 rpm) at a radial position 40 mm from the center of the surface of the lens substrate, the perimeter speed $V_{40}$ (mm/s) at that position would be: perimeter speed $V_{40}$ (mm/s) = 400/60 x (2π x 40) ≒ 1674 (mm/sec), and the dropwise critical perimeter speed would be set to a value that did not exceed 2,000 mm/s.

(d) Determining the spiral pitch from the perimeter speed

The graph plotted in (a) above is used to obtain a coating line width from the perimeter speed obtained in (c) above, and a spiral pitch is determined such that adjacent spiral coating paths either contact or overlap each other. Here, the value that is read from the graph of (a) above can be multiplied by a safety factor.

(e) Determining the (horizontal) rate of nozzle displacement

A (horizontal) rate of nozzle displacement is determined for each radius based on the rotational speed and the spiral pitch obtained above.

Next, after conducting coating based on the coating conditions determined by the above-described procedure, the rotating step is conducted. In consideration of the productivity and drying time of the coating liquid in the above-described coating step, the series of operations from the start to the end of coating are desirably conducted in about 0.3 to 2.2 minutes.

Next, the rotating step will be described in detail.

Rotating step

In the above coating step, after coating a water-based coating liquid in a spiral configuration, the surface that has been coated with the above-described coating liquid is rotated while facing upward. Thus, at least a portion of the water-based solvent in the coating liquid is removed to solidify the coating liquid, permitting the formation of a resin layer. Further, by conducting this step, unsolidified coating liquid (particularly coating liquid applied in the center portion) can be spread over the entire surface of the lens, achieving a uniform film thickness. Further, by burying irregularities in the spiral pitch, a smooth resin layer can be obtained. In the above-described coating step, coating is conducted on the surface of the lens substrate from outside to inside, so the coating liquid on the perimeter portion of the surface of the lens substrate that is applied first and is solidifying can function as a wall, preventing liquid that disperses during the rotating step from scattering beyond the perimeter. Thus, liquid can disperse uniformly over the surface of the lens substrate, making it possible to achieve uniform film thickness and a smooth surface.

It is desirable to conduct the rotating step before the coating liquid has completely solidified so that the coating liquid can be made to move across the surface of the lens substrate by centrifugal force. Accordingly, the rotating step is desirably conducted immediately following the coating step. The rotational speed of the lens substrate in the rotating step need only be suitably set so as to allow the coating liquid to spread across the surface of the lens substrate; for example, a rotational speed of about 800 to 2,000 rpm is feasible. Specifically, the rotational speed in the rotating step can be set to be greater than or equal to the maximum rotational speed during the coating step.

The rotational speed in the rotating step need not be constant throughout the rotating step, and can be varied continuously or in stepwise fashion. The rotational speed is desirably set relatively high to eliminate irregularities on the coating surface, after which rotation is continued at the same or a lower rotational speed. This makes it possible to smooth the outermost surface of the coating liquid. The first rotating step can be conducted for a period of about 5 to 180 seconds, for example.

In the present invention, to achieve a film of more uniform thickness, the above rotating step (also referred to hereinafter as the "first rotating step") and a second rotating step, described below, are desirably conducted to form a resin layer.

Second rotating step

In the above first rotating step, while the fluidity of the coating liquid that has been applied to the surface of the lens substrate is still relatively high, differences in the form of irregularities between spiral coating paths can be buried to smooth the surface and adjust the film thickness. Additionally, the second rotating step is conducted at greater speed than the first rotating step to expel beyond the lens, by means of centrifugal force, excess liquid that has accumulated at the perimeter portion of the lens surface, increasing the uniformity of the film thickness. The second rotating step is conducted at greater speed than the first rotating step, generating a greater centrifugal force, to eliminate the accumulation of liquid in the perimeter portion by expelling beyond the lens excess liquid that has remained on the perimeter portion of the lens surface without being expelled beyond the lens by centrifugal force during the first rotating step.

However, the present inventors discovered through research that based on the timing at which the second rotating step was begun, irregularities corresponding to spiral coating paths (also referred to hereinafter as "coating traces") that should have been eliminated by rotation for the purpose of smoothing were observed to appear on the surface of the coating film. Optically, these irregularities functioned as concave and convex lenses, and were thus found to impart distortion and differences in brightness to the image transmitted. When such distortion and differences in brightness became so clear as to be visible to the eye, use of the lens as an eyeglass lens became difficult.
Accordingly, in the present invention, the second rotating step is desirably begun after the water-based coating liquid that has been coated on the surface of the lens substrate is in a uniformly dry state, that is, once the outermost surface of the water-based coating liquid has dried. Thus, it becomes possible to obtain a plastic lens with good optical characteristics, from which the excess liquid on the perimeter portion of the surface of the lens substrate has been eliminated, on which the generation of coating traces has been prevented, and which has a resin layer of uniform thickness.

Why the generation of coating traces can be prevented by beginning the second coating step after the outermost surface of the coating liquid is in a uniform state of dryness is unclear. However, the present inventors have attributed it to the following.

(Hypothesis 1 for the formation of coating traces)

Drying of the water-based coating liquid coated on the surface of the lens substrate begins immediately following coating. Drying of the coating liquid is also induced by the scattering of moisture from the surface of the coating liquid due to rotation. However, drying is also conceivably caused by the absorption of water by the surface of the lens substrate due to the highly hygroscopic property of the lens material, which is generally known. In particular, lens substrates that have been maintained in low humidity storage facilities and stored in packages that lock out moisture to prevent the occurrence of yellowing and the like due to moisture absorption tend to absorb large quantities of moisture. When a coating liquid containing a water-based solvent comes into contact with a highly hygroscopic lens substrate, the lens substrate rapidly absorbs a large quantity of water-based solvent. As a result, drying of the coating liquid also takes place at the interface with the lens. When applying a spiral coating, immediately following the coating, irregularities corresponding to coating paths are present on the surface of the coating film. Drying advances more rapidly in the interior thereof, which is presumed to result in the formation of irregularities similar in shape to the surface of the coating film. It is thought that, in the first coating step, relatively highly fluid portions of the coating film are displaced by centrifugal force to bury gaps of internal irregularities, resulting in smoothing. However, when the second rotating step is begun at high speed with the coating liquid on the surface in an undried state, the coating liquid that has buried the gaps of the irregularities ends up being removed by centrifugal force. As a result, the irregularities within the coating film that had been masked are exposed on the surface of the coating film, which is thought to be why irregularities that are similar in shape to the surface prior to smoothing in the first rotating step are thought to appear.

(Hypothesis 2 for the formation of coating traces)

Additionally, there would be cases where coating traces occur even when no moisture is absorbed by the surface of the lens substrate. In such cases, when conducting a spiral coating, irregularities corresponding to the coating path are

present on the surface of the coating film immediately following coating. It is presumed that such irregularities are maintained as a result of a relatively advanced state of drying on portions of the surface of the coating film. It is thought that, in the first coating step, relatively highly fluid portions of the coating film are displaced by centrifugal force to bury gaps of internal irregularities, resulting in smoothing. However, the main displaced portions of coating liquid for smoothing of the coating liquid are the area at which a perimeter-side portion of a protrusion moves to the adjacent indentation and a lens-center-side portion of the protrusion. Accordingly, in the first rotating step, a layered structure is thought to be formed on the adjacent indentation and the lens-center-side portion of the protrusion of the coating film, by the lamination of undried coating liquid on the coating liquid a portion of which has been dried. Here, when the high-speed second rotating step is begun for the coating liquid having the layered structure with the outermost surface in an undried state, the coating liquid that has buried the gaps of the irregularities ends up being removed by centrifugal force. As a result, irregularities in the interior of the coating film that had been masked are exposed on the surface of the coating film, and irregularities similar in shape to the surface prior to smoothing in the first coating step are thought to appear.

By contrast, when the second rotating step is begun with the surface of the coating liquid dry and almost all fluidity gone, the excess liquid along the perimeter portion of the lens, where the surface has been maintained smooth, is thought to be removed. The reason why high-speed rotation (second rotating step) following drying of the surface of the coating liquid can remove excess liquid from the perimeter portion while maintaining the smoothness of the surface shape is thought to be that the centrifugal force exerted on the coating liquid on the lens substrate is thought to increase with proximity to the perimeter portion.

As set forth above, the second rotating step is desirably begun after at least the outermost surface of the water-based coating liquid that has been coated on the surface of the lens has dried. In this context, the term "dried" is employed in a broad sense to mean a lower moisture content than during the first rotating step, and in a narrow sense to mean having a viscosity adequate to counter the centrifugal force exerted at any position on the surface of the lens substrate.

The second rotating step can be conducted after drying the lens with air or the like following the first rotating step, but is desirably conducted immediately after the first step from the perspective of productivity. The fact that the outermost surface of the coating liquid on the lens surface is dry can be determined visually. The second rotating step can be begun following visual confirmation that the outermost surface of the coated surface is dry. However, when beginning the second rotating step immediately following the first rotating step, in particular, it is desirable to conduct a preliminary test prior to beginning actual production to experimentally determine in advance the rotation conditions (rotational speed and period of rotation) that will dry the outermost surface of the coating liquid in the first rotating step, and begin the second rotating step following the period of rotation that is determined. Drying of the coating liquid also affects the humidity of the operating environment. Accordingly, the first rotating step is desirably conducted at a suitable humidity (such as 40 to 60 percent RH), and the series of operations from the coating step to the second rotating step are preferably conducted at a suitable humidity.

As set forth above, the second rotating step is conducted to apply a greater centrifugal force than the centrifugal force in the first rotating step on excess liquid that has accumulated in the perimeter portion of the lens surface during the first rotating step, and to remove (expel beyond the lens) excess liquid from the perimeter portion of the surface of the lens substrate. The rotational speed in the second rotating step is set greater than the maximum rotational speed during the first rotating step. The rotating speed during the second step can be set, for example, to from 1,000 to 6,000 rpm, desirably 3,000 to 5,000 rpm. Further, the maximum rotational speed in the second rotating step is desirably set within a range of 2 to 5-fold the maximum rotational speed in the first rotating step. The rotational speed in the second rotating step does not have to be constant, but can be varied continuously or in stages during the first rotating step. The period of rotation of the second rotating step can be about 0.5 to 2 seconds, for example.

By means of the above coating step and rotating steps and, as needed, a drying step such as air drying, it is possible to form a resin layer on the surface of the lens substrate. According to the present invention, it is possible to form a thick resin layer using a relatively highly viscous coating liquid. The thickness of the resin layer that is formed is not specifically limited. According to the present invention, it is possible to obtain a plastic lens having a resin layer with a uniform thickness of about 0.5 to 50 micrometers, for example, with excellent surface smoothness.

## Plastic lens substrate

The plastic lens substrate on which the water-based coating liquid is coated in the present invention will be described next.

Various substrates that are employed in common plastic lenses can be employed as the plastic lens substrate. Examples of the lens substrate are: copolymers of methyl methacrylate and one or more other monomers; copolymers of diethylene glycol bisallylcarbonate and one or more other monomers; copolymers of polyurethane and polyurea; polycarbonates; polystyrenes; polyvinyl chlorides; unsaturated polyesters; polyethylene terephthalate; polyurethane; polythiourethane; sulfide resins employing ene-thiol reactions; and sulfur-containing vinyl polymers. Of these, urethane-based ones are desirable, but this is not a limitation. The lens substrate is desirably a plastic lens substrate that is employed in eyeglasses.

The plastic lens substrate may be a lens both surfaces of which are convex, a lens both surfaces of which are concave, a lens one surface of which is flat and the other surface of which is convex, a lens one surface of which is flat and the other surface of which is concave, a convex meniscus lens, a concave meniscus lens. The size of the lens substrate is not specifically limited. However, an excessively large lens will require a lengthy coating step, so a lens with a surface that is coated with coating liquid of about 50 to 100 mm in diameter is desirably employed. A lens having a convex surface on which liquid accumulation is effectively prevented by means of centrifugal force is desirable. Further, the surface of the lens substrate is desirably a convex surface comprising a curved surface with a surface curvature of -8 to +8 to stably retain the coating liquid on the lens substrate.

In the present invention, both surfaces of the lens substrate on which the resin layer is formed may have center symmetry (such as two spherical surfaces), either one of the surfaces may have a surface shape without center symmetry, or both of the surfaces may have surface shapes without center symmetry. According to the present invention as set forth above, it is possible to determine coating conditions independently of the surface shape of the lens substrate, so the present invention is particularly suitable as a method for manufacturing lenses having complex surface shapes lacking center symmetry. Examples of such lenses are progressive dioptric power lenses both surfaces of which are aspherical and have progressive elements; progressive dioptric power lenses having a progressive surface on one side and a toric surface on the other side; monofocal lenses having toric components distributed on both surfaces; and eyeglass lenses processed so that the optical center of a monofocal lens (including the far measurement position of a progressive dioptric power lens) is rendered eccentric relative to the geometric center of a round lens.

A progressive dioptric power lens is a lens that is employed as a progressive dioptric power lens for presbyopia. While being employed in presbyopic eyeglasses, progressive dioptric power lenses afford the advantage of not being readily identifiable as presbyopic eyeglasses based on exterior appearance and the advantage of providing continuously clear, unbroken vision from far to near. They are thus widely employed in general. However, without introducing boundary lines into the limited lens area, multiple visual fields are provided, including a visual field for viewing distance, a visual field for viewing up close, and visual fields for viewing intermediate distances. Examples of progressive dioptric power lens that can be manufactured by the present invention include, first, a single-sided progressive dioptric power lens having a progressive surface either on a first dioptric surface that is the object-side surface, or a second dioptric surface that is the eyeball-side surface, second, dual-surface aspherical progressive dioptric power lens with progressive dioptric power effects distributed between the first dioptric surface that is the object-side surface and the second dioptric surface that is the eyeball-side outer surface, in which the first surface and the second surface collectively impart a far degree and introduction degrees based on the prescription. The progressive dioptric power lens has, for example, a degree distribution such as that shown in Figs. 4 to 7, or the cross-section shown in Figs. 8a and 8b. According to the present invention, uniform resin layers can be formed even on lenses having such complex surface shapes. In particular, the present invention is suitable for application to lenses in which the coated surfaces comprise aspherical surfaces having progressive surfaces or progressive elements, with shapes such that control of the discharge nozzle position based on the shape of the lens surface is difficult.

Water-based coating liquid

The coating liquid that is coated on the surface of the lens substrate in the present invention comprises a resin component and a water-based solvent. Examples of the resin component are polyurethane resins, vinyl acetate, and ethylene vinyl copolymers in the form of olefin-based, acrylic-based, epoxy-based, and urethane-based emulsions and the like. The coating liquid is desirably an emulsion in the form of the above resin component dispersed in a water-based solvent (such as water and mixed solvents of water and alcohols, ketones, cellosolve, and the like). Of these, the use of urethane-based emulsions having polar functional groups that facilitate adhesion to the surface of the lens substrate is desirable. When another layer is provided over the resin layer, as described further below, the emulsion can function as an adhesive layer.

The manufacturing method of the present invention can employ a coating liquid of relatively high viscosity, which is difficult to uniformly apply by common spin coating, to form a resin layer of uniform thickness and excellent surface smoothness. The viscosity of the coating liquid can be about 10 to 200 CPS, for example. The solid component concentration of the coating liquid desirably falls within a range of 20 to 50 mass percent from the perspective of ensuring liquid stability and film thickness.

Prior to applying the coating liquid, the surface of the lens substrate can be chemically treated with an acid, alkali, various organic solvents, or the like; physically treated with plasma, UV radiation, ozone, or the like; or detergent treated with various detergents. Conducting such a pretreatment can enhance adhesion between the lens substrate and the resin layer.

According to the manufacturing method of the present invention, even when the coating liquid has poor wettability for the surface being coated, a uniform coating is possible by spin coating. The present invention is suitable when the contact angle between the coating liquid and the surface being coated is, for example, equal to or greater than 20° and

equal to or less than 60°, and is particularly desirably implemented at from 26 to 54°.

Normally, in the coating of a water-based polymer, a leveling agent (surfactant) is added to enhance the wettability of the coating liquid and facilitate the coating. By contrast, in the present invention, not just a water-based coating liquid to which a leveling agent has been added, but a water-based coating liquid not containing a leveling agent, can be uniformly coated on a plastic lens. Depending on the type of water-based polymer, the stability of the liquid will sometimes drop unless a suitable leveling agent is selected based on the ionic properties of the polymer. Thus, the fact that a coating can be readily applied even without a leveling agent is a major advantage with respect to such systems.

A lens on which the above-described resin layer has been formed can normally be shipped as a lens product after laminating other functional layers (such as a photochromic layer and a hard coat layer). Generally, a resin layer that has been formed by drying and solidifying a water-based coating liquid is suitable as a primer layer for enhancing adhesion. Thus, by laminating another layer over this primer layer, it is possible to increase adhesion between the layer and the lens substrate. Compared to the method of directly forming a functional layer on the lens substrate, the level of adhesion that should be generated on the functional layer side can be reduced, and the loss of the function that should be developed but would be deteriorated by adding the adhesion-enhancing component can be prevented. These points are particularly advantageous for photochromic layers the performance of which is greatly affected by the use of additives. Thus, a photochromic layer is desirably formed on a resin layer formed of the above-described coating liquid in the present invention.

A photochromic layer can be formed by means of a curing treatment such as irradiation with UV radiation following coating on the resin layer by steps based on the above-described coating step and rotating step. In such cases, it does not matter if gaps are present in some of the spiral coating paths. This is because photochromic liquids are generally non-water-based solutions, have good wettability for the resin layer, and can be uniformly spread on the resin layer by rotation following the coating layer. Photochromic liquids can also be coated by the method described in Japanese Unexamined Patent Publication (KOKAI) No. 2005-218994, which is expressly incorporated herein by reference in its entirety.

The photochromic liquid can be prepared from curable components, photochromic dyes, polymerization initiators, and optional additives. Each of these components is described below.

(i) Curable components

The curable components that can be employed to prepare the photochromic film are not specifically limited. Known photopolymerizable monomers and oligomers, and their prepolymers, having radical polymerizable groups such as (meth)acryloyl groups, (meth)acryloyloxy groups, vinyl groups, allyl groups, and styryl groups, can be employed. Of these, compounds having a radical polymerizable group in the form of a (meth)acryloyl group or (meth)acryloyloxy group are desirable because of availability and ease of curing. The (meth) acryloyl denotes both acryloyl and methacryloyl.

To prevent mixing at the interface between the photochromic film and the lens substrate, facilitate hardness adjustment, achieve good solvent resistance and hardness following film formation, achieve good cured product characteristics such as heat resistance, and achieve good photochromic characteristics such as darkening density and fading speed, radical polymerizable monomers exhibiting a Rockwell L scale hardness of equal to or higher than 60 (also sometimes referred to as a "high-hardness monomer", hereinafter) as a homopolymer are preferably employed. Radical polymerizable monomers exhibiting a Rockwell L scale hardness of equal to or lower than 40 (also sometimes referred to as a "low-hardness monomer", hereinafter) as a homopolymer as well can be employed together with the high-hardness monomer. The low-hardness monomers have the effect of increasing the toughness of the cured products and increasing the fading speed of the photochromic compound.

The "Rockwell L scale hardness" refers to the hardness as measured according to JIS-B7726. Whether or not the above hardness condition is satisfied can be simply determined by conducting measurement of the homopolymers of the individual monomers. Specifically, the monomer is polymerized to obtain a cured product 2 mm in thickness. This is then maintained for one day indoors at 25°C. A Rockwell hardness meter is then employed to measure the Rockwell L scale hardness, permitting ready confirmation.

The polymer that is used in the measurement of the Rockwell L scale hardness is obtained by conducting cast polymerization under conditions where 90 percent or more of the polymerizable groups of the charged monomer polymerize. The Rockwell L scale hardness of a cured product that has been polymerized under such conditions will give measurements of nearly constant value.

The high-hardness monomer has the effect of enhancing the solvent resistance, hardness, and heat resistance of the cured product. A radical polymerizable monomer exhibiting a Rockwell L scale hardness of 65 to 130 as a homopolymer is desirable to effectively achieve the above effects.

Such a high-hardness monomer is normally a compound having 2 to 15, desirably 2 to 6, radical polymerizable groups. Specific desirable examples are the compounds denoted by general formulas (1) to (5) below:

[Chem. 1]

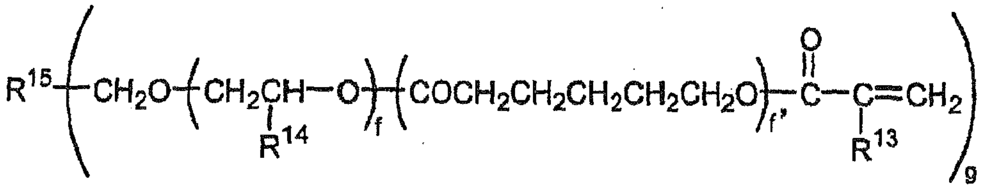

... (1)

(In the formula, $R^{13}$ is a hydrogen atom or methyl group, $R^{14}$ is a hydrogen group, methyl group or ethyl group, $R^{15}$ is a trivalent to hexavalent organic group, f is an integer ranging from 0 to 3, f' is an integer ranging from 0 to 3, and g is an integer ranging from 3 to 6.)

[Chem. 2]

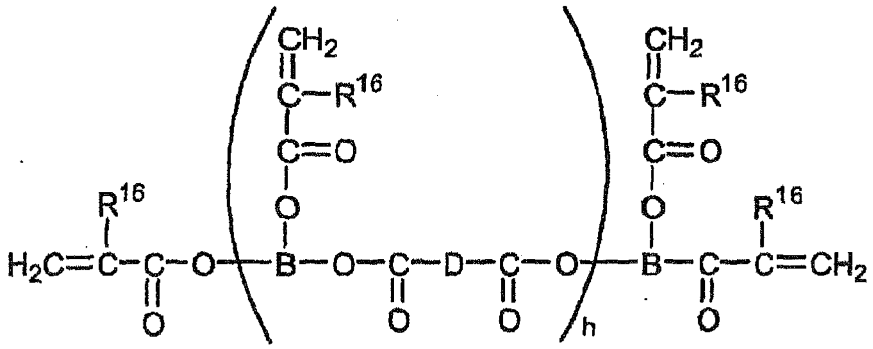

... (2)

(In the formula, $R^{16}$ is a hydrogen atom or methyl group, B is a trivalent organic group, D is a divalent organic group, an h is an integer ranging from 1 to 10.)

[Chem. 3]

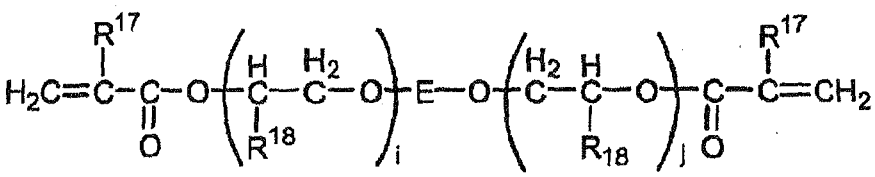

... (3)

(In the formula, $R^{17}$ is a hydrogen atom or methyl group, $R^{18}$ is a methyl group, ethyl group or hydroxyl group, E is a divalent group comprising a cyclic group, and i and j are positive integers with an average value of i + j of 0 to 6.)

[Chem. 4]

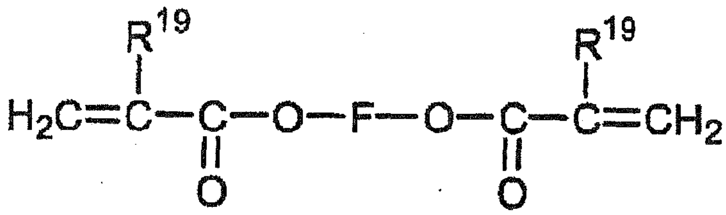

··· (4)

(In the formula, $R^{19}$ is a hydrogen atom or methyl group, and F is an alkylene group having 2 to 9 carbon atoms on the main chain thereof and optionally having a side chain.)

[Chem. 5]

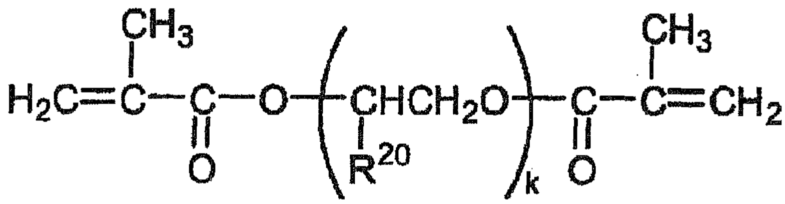

··· (5)

(In the formula, $R^{20}$ is a hydrogen atom, methyl group or ethyl group, and k is an integer ranging from 1 to 6.)

In general formulas (1) to (4) above, each of $R^{13}$ to $R^{19}$ is a hydrogen atom or a methyl group. Thus, the compounds denoted by general formulas (1) to (4) comprise 2 to 6 (meth)acryloyloxy groups.
In general formula (1), $R^{14}$ is a hydrogen atom, methyl group, or ethyl group.
In general formula (1), $R^{15}$ is a trivalent to hexavalent organic group. The organic group is not specifically limited, and may comprise on the main chain thereof a bond other than a carbon-carbon bond, such as an ester bond, ether bond, amide bond, thioether bond, sulfonyl bond, or urethane bond.
To exhibit a Rockwell L scale hardness of equal to or higher than 60 as a homopolymer, $R^{15}$ is desirably an organic group having 1 to 30 carbon atoms, preferably an organic group having 1 to 15 carbon atoms, optionally comprising an ether bond and/or a urethane bond.
Each of f and f is independently an integer falling within a range of 0 to 3. To achieve a Rockwell L scale hardness of equal to or higher than 60, the sum of f and f is desirably 0 to 3.

Specific examples of the high-hardness monomer denoted by the above general formula (1) are: trimethylolpropane trimethacrylate, trimethylolpropane triacrylate, tetramethylolmethane trimethacrylate, tetramethylolmethane triacrylate, trimethylolpropane trimethacrylate, tetramethylolmethane tetramethacrylate, tetramethylolmethane tetraacrylate, trimethylolpropane triethylene glycol trimethacrylate, trimethylolpropane triethyleneglycol triacrylate, ethoxylated pentaerythritol tetraacrylate, ethoxylated pentaerythritol tetramethacrylate, pentaerythritol trimethacrylate, pentaerythritol tetramethacrylate, dipentaerythritol hexaacrylate, urethane oligomer tetraacrylate, urethane oligomer hexamethacrylate, urethane oligomer hexaacrylate, polyester oligomer hexaacrylate, caprolactone-modified dipentaerythritol hexaacrylate, and ditrimethylolpropane tetraacrylate.

In the above general formula (2), B is a trivalent organic group and D is a divalent organic group. The B and D are not specifically limited, and may comprise in the main chains thereof a bond other than a carbon-carbon bond, such as an ester bond, ether bond, amide bond, thioether bond, sulfonyl bond, or urethane bond. To achieve a Rockwell L scale hardness of equal to or higher than 60 as a homopolymer, B is desirably an organic group derived from a linear or branched hydrocarbon having 3 to 10 carbon atoms, and D is desirably an organic group derived from an aliphatic linear or branched chain hydrocarbon having 1 to 10 carbon atoms or an aromatic hydrocarbon having 6 to 10 carbon atoms.
To achieve a Rockwell L scale hardness of equal to or higher than 60 as a homopolymer, h is an integer ranging from 1 to 10, desirably an integer ranging from 1 to 6.
Specific examples of high-hardness monomers denoted by the above general formula (2) are: tetrafunctional polyester oligomers with a molecular weight of 2,500 to 3,500 (such as EB80, Daicel UCB Co., Ltd.); tetrafunctional polyester oligomers with a molecular weight of 6,000 to 8,000 (such as EB450, Daicel UCB Co., Ltd.); hexafunctional polyester

oligomers with a molecular weight of 45,000 to 55,000 (such as EB1830, Daicel UCB Co., Ltd.), and tetrafunctional polyester oligomers with a molecular weight of 10,000 (such as GX8488B, DAI-ICHI KOGYO SEIYAKU CO., LTD.).

In the above general formula (3), $R^{18}$ is a hydrogen atom, methyl group, ethyl group, or hydroxyl group. In general formula (3), E denotes a divalent organic group comprising a cyclic group. The organic group is not specifically limited other than that it comprises a cyclic group, and may comprise a bond other than a carbon-carbon bond, such as an ester bond, ether bond, amide bond, thioether bond, sulfonyl group, or urethane bond in the main chain thereof. Examples of the cyclic group comprised in E are benzene rings, cyclohexane rings, adamantane rings, and the cyclic groups indicated below.

[Chem. 6]

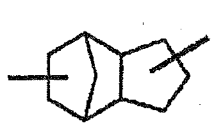

,

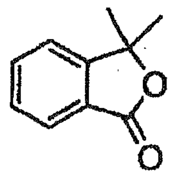

The cyclic group comprised in E is preferably a benzene ring, and E is more preferably a group denoted by the following formula:

[Chem. 7]

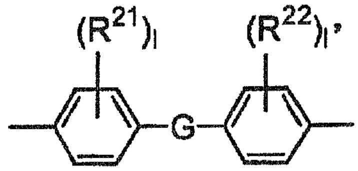

(wherein G is any of groups selected from a oxygen atom, sulfur atom, $-S(O_2)-$ $-C(O)-$, $-CH_2-$, $-CH=CH-$, $-C(CH_3)_2-$, and $-C(CH_3)(C_6H_s)-$, each of $R^{21}$ and $R^{22}$ is independently an alkyl group having 1 to 4 carbon atoms or a halogen atom, and each of l and l' is independently an integer ranging from 0 to 4), and the most preferable E is a group denoted by the following formula:

[Chem. 8]

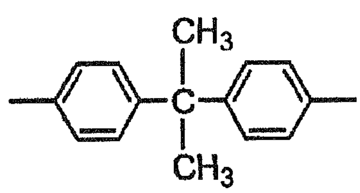

In the above general formula (3), i and j denote positive integers with an average value of i+j of 0 to 6. The compound denoted by general formula (3), excluding the case where both i and j are 0, can normally be obtained as a mixture of multiple compounds of differing i and j. Since they are difficult to isolate, i and j are indicated as an average value of i+j. The average value of i+j is preferably 2 to 6.

Specific examples of the high-hardness monomer denoted by general formula (3) are bisphenol A dimethacrylate, 2,2-bis(4-methacryloyloxyethoxyphenyl)propane, and 2,2-bis(3,5-dibromo-4-methacryloyloxyethoxyphenyl)propane.

In the above general formula (4), $R^{19}$ is a hydrogen atom or a methyl group, and F is an alkylene group having 2 to 9 carbon atoms on the main chain thereof and optionally having a side chain. Examples of the alkylene group having 2 to 9 carbon atoms on the main chain thereof are: ethylene, propylene, trimethylene, butylene, neopentylene, hexylene, and nonylylene groups.

Specific examples of the high-hardness monomer denoted by general formula (4) are ethylene glycol diacrylate, ethylene glycol dimethacrylate, 1,4-butylene glycol dimethacrylate, 1,9-nonylene glycol dimethacrylate, neopentylene glycol dimethacrylate, and neopentylene glycol diacrylate.

In the above general formula (5), $R^{20}$ is a hydrogen atom, methyl group, or ethyl group, and k is an integer ranging from 2 to 6, desirably 3 or 4.

Specific examples of the high-hardness monomer denoted by general formula (5) are: diethylene glycol dimethacrylate, triethylene glycol dimethacrylate, tetraethylene glycol dimethacrylate, tripropylene glycol dimethacrylate, and tetrapropylene glycol dimethacrylate.

Depending on the combination of substituent, some of the compounds denoted by the above general formulas (1) to (5) may become a homopolymer with a Rockwell L scale hardness of less than 60. In such cases, these compounds are classified as the low-hardness monomers or medium-hardness monomers.

There are also high-hardness monomers that are not denoted by the above general formulas (1) to (5). Typical examples of such compounds are: bisphenol A diglycidyl methacrylate, ethylene glycol bisglycidyl methacrylate, and glycidyl methacrylate.

(ii) Photochromic dye

Known photochromic dyes can be added to the photochromic liquid. Examples are photochromic compounds such as fulgimide compounds, spiro-oxazine compounds, and chromene compounds. These photochromic compounds can be employed without specific limitation in the present invention.

For example, the compounds described in Japanese Unexamined Patent Publication (KOKAI) Heisei No. 2-28154, Japanese Unexamined Patent Publication (KOKAI) Showa No. 62-288830, the Specification of No. WO94/22850, and the Specification of No. WO96/14596, which are expressly incorporated herein by reference in their entirety, can suitably employed as the above fulgimide compounds, spiro-oxazine compounds, and chromene compounds.

The compounds disclosed in Japanese Unexamined Patent Publication (KOKAI) Nos. 2001-114775, 2001-031670, 2001-011067, 2001-011066, 2000-347346, 2000-34476, 2000-3044761, 2000-327676, 2000-327675, 2000-256347, 2000-229976, 2000-229975, 2000-229974, 2000-229973, 2000-229972, 2000-219687, 2000-219686, and 2000-219685; and Japanese Unexamined Patent Publication (KOKAI) Heisei Nos. 11-322739, 11-286484, 11-279171, 10-298176, 09-218301, 09-124645, 08-295690, 08-176139, and 08-157467 are suitably employed as compounds having excellent photochromic properties. The contents of the above-cited publications are expressly incorporated herein by reference in their entirety.

Of these photochromic compounds, the use of chromene-based photochromic compounds is particularly desirable because the durability of their photochromic characteristics is particularly greater than that of other photochromic compounds, and the enhancement in photochromic characteristics such as darkening density and fading speed is greater than in other photochromic compounds. Among these chromene-based photochromic compounds, those having a molecular weight of equal to or greater than 540 are suitably employed because the improvement in photochromic characteristics by the present invention, such as darkening density and fading speed, is particularly pronounced relative to other chromene-based photochromic compounds.

More than one of these photochromic compounds can be suitably mixed for use to exhibit suitable darkening tones.

The concentration of the photochromic dye in the photochromic liquid is desirably 0.01 to 20 mass parts, preferably 0.1 to 10 mass parts, per 100 mass parts of the above-described polymerizable component (radical polymerizable monomer and the like).

(iii) Polymerization initiator

The polymerization initiator that is added to the photochromic liquid can be suitably selected from among known thermal polymerization initiators and photopolymerization initiators based on the polymerization method.

The photopolymerization initiator is not specifically limited. Examples are benzoin, benzoin methyl ethyl, benzoin butyl ether, benzophenol, acetophenone, 4,4'-dichlorobenzophenone, diethoxyacetophenone, 2-hydroxy-2-methyl-1-phenylpropane-1-one, benzyl methyl ketal, 1-(4-isopropylphenyl)-2-hydroxy-2-methylpropane-1-one, 1-hydroxycyclohexyl phenyl ketone, 2-isopropylthiooxanthone, bis(2,6-dimethoxybenzoyl-2,4,4-trimethyl pentyl phosphine oxide, bis(2,4,6-trimethylbenzoyl)phenyl phosphine oxide, 2,4,6-trimethylbenzoyldiphenyl phosphine oxide, and 2-benzyl-2-dimethylamino-1-(4-morpholinophenyl)butanone-1. Desirable compounds are 1-hydroxycyclohexyl phenyl ketone, 2-isopropylthiooxanthone, bis(2,6-dimethoxybenzoyl-2,4,4-trimethyl pentyl phosphine oxide, bis(2,4,6-trimethylbenzoyl)phenyl phosphine oxide, and 2,4,6-trimethylbenzoyldiphenyl phosphine oxide.

More than one of these photopolymerization initiators may be suitably mixed for use. The blending amount of the photopolymerization initiator to the total quantity of photochromic liquid is normally 0.001 to 5 mass parts, desirably 0.1 to 1 mass part, per 100 mass parts of the polymerizable component (radical polymerizable monomer and the like).

When forming a photochromic film by thermal polymerization, examples of utilizable thermal polymerization initiators are: benzoyl peroxide, p-chlorobenzoyl peroxide, decanoyl peroxide, lauroyl peroxide, acetyl peroxide, and other diacyl peroxides; t-butylperoxy-2-ethylhexanoate, t-butyl peroxydicarbonate, cumyl peroxyneodecanate, t-butyl peroxybenzoate, and other peroxy esters; diisopropyl peroxydicarbonate, di-2-ethylhexyl peroxydicarbonate, di-sec-butyl oxycarbonate, and other percarbonates; 2,2'-azopisisobutyronitrile, 2,2'-azopis(4-dimethylvaleronitrile), 2,2'-azobis (2-methylbutyronitrile), 1,1'-azobis(cyclohexane-1-carbonitrile), and other azo compounds.
The quantity of the thermal polymerization initiator employed varies with the polymerization conditions, type of initiator, and type and composition of polymerizable monomer. Normally, a quantity ranging from 0.01 to 10 mass parts per 100 mass parts of the above-described polymerizable components is suitable. The above thermal polymerization initiators may be employed singly or in combinations of two or more.

(iv) Additives

To enhance the durability of the photochromic dye, increase the darkening speed, increase the fading speed, and enhance moldability, additives such as surfactants, oxidation inhibitors, radical scavengers, UV stabilizers, UV absorbing agents, mold release agents, coloration inhibitors, antistatic agents, fluorescent colorants, colorants, pigments, fragrance materials, and plasticizers can be added to the photochromic liquid. Known compounds can be employed as the additives without specific limitation.
Any from among nonionic, anionic, and cationic surfactants can be employed as the surfactants. However, the use of nonionic surfactants is desirable due to their solubility in polymerizable monomers. Specific examples of suitably employed nonionic surfactants are: sorbitan fatty esters, glycerin fatty esters, decaglycerin fatty esters, propylene glycol/pentaerythritol fatty esters, polyoxyethylene sorbitan fatty esters, polyoxyethylene sorbit fatty esters, polyoxyethylene glycerin fatty esters, polyethylene glycol fatty esters, polyoxyethylene alkyl ethers, polyoxyethylene phytosterol/phytostanols, polyoxyethylene polyoxypropylene alkyl ethers, polyoxyethylene alkyl phenyl ethers, polyoxyethylene castor oil/hardened castor oil, polyoxyethylene lanolin/lanolin alcohol/beeswax derivatives, polyoxyethylene alkyl amines/fatty acid amides, polyoxyethylene alkyl phenyl formaldehyde condensates, and single-chain polyoxyethylene alkyl ethers. In the use of the surfactant, two or more surfactants may be combined for use. The quantity of surfactant added desirably falls within a range of 0.1 to 20 mass percent per 100 mass parts of the above-described polymerizable components.
Oxidation inhibitors, radical scavengers, UV stabilizers, and UV absorbing agents may be suitably employed in the form of hindered amine light stabilizers, hindered phenol oxidation inhibitors, phenol-based radical scavengers, sulfur-based oxidation inhibitors, benzotriazole-based compounds, benzophenone-based compounds, and the like. These oxidation inhibitors, radical scavengers, UV stabilizers, and UV absorbing agents can be employed in combinations of two or more. In the use of these nonpolymerizable compounds, surfactants may be employed in combination with oxidation inhibitors, radical scavengers, UV stabilizers, and UV absorbing agents. The quantity that is added of these oxidation inhibitors, radical scavengers, UV stabilizers, and UV absorbing agents desirably falls within a range of 0.001 to 20 mass parts per 100 mass parts of the above-described polymerizable components.
There is a known problem of polymer materials being degraded by the following mechanism due to oxidation in the presence of oxygen that is occasioned by energy such as ultraviolet radiation and heat. First, when a polymeric compound is exposed to a high level of energy, such as by being irradiated with UV, radicals are produced within the polymer. These then serve as starting points for the generation of new radicals and peroxides. Since peroxides are generally unstable, they are readily decomposed by heat and light, producing more new radicals. Once oxidation has begun in this manner, it begins to occur in chainlike fashion, degrading the polymer material and reducing its function. To prevent oxidation by such a mechanism, the methods of (1) rendering the radicals that have been produced inactive, and (2) breaking down the peroxides that have been generated into harmless substances, so that they stop producing radicals, are conceivable. Accordingly, the use of compounds capable of capturing radicals (radical scavengers) to prevent oxidation by method (1) is conceivable, and the use of compounds having the ability to break down peroxides (peroxide compound degrading agents) to prevent oxidation by the method of (2) is conceivable. In the present invention, the use of both compounds having the ability to scavenge radicals and compounds having the ability to break down peroxides as oxidation inhibitors is possible. The use of compounds having the ability to scavenge radicals is desirable. Photochromic compounds absorb ultraviolet radiation from sunlight, develop color as their molecular structure changes, and return to their original state when they absorb heat and visible light. Energy is transferred to oxygen along this change pathway in the presence of oxygen, producing oxygen radicals of great oxidizing power. Accordingly, compounds having the ability to scavenge radicals can capture these oxygen radicals, thereby effectively preventing oxidation in the photochromic film. Since the progression of radical polymerization can be inhibited by the addition of radical scavengers, the addition of radical scavengers is also effective in forming a flexible photochromic film.
From the above perspectives, hindered amine and hindered phenol compounds are examples of desirable additives. Since these compounds can exhibit the ability to scavenge radicals, they can contribute to the formation of a flexible photochromic film.

They can also prevent the oxidation of the photochromic film that is obtained to enhance durability. The addition of the above compounds can also prevent deterioration of the photochromic dye during curing. Known hindered amine and hindered phenol compounds may be employed without specific limitation. Among the hindered amine compounds, when employed in coating, particularly as compounds having the effect of preventing the deterioration of photochromic dyes, examples are bis(1,2,2,6,6-pentamethyl-4-piperidyl)sebacate and the like. A desirable example of a hindered phenol compound is dibutyl hydroxytoluene acid (BHT). The quantity added, by way of example, falls within a range of 0.001 to 20 mass parts, desirably a range of 0.1 to 10 mass parts, and preferably, a range of 1 to 5 mass parts per 100 mass parts of the above-described polymerizable components.

The various additives, such as the above compounds having radical-scavenging ability, can be added to the photochromic liquid, and can also be added following formation of the photochromic film by impregnation treatment or the like. In that case, impregnation is desirably conducted by applying a compound having radical-scavenging ability from the surface on the object side.

It is also desirable to incorporate surfactants, leveling agents, and the like into the photochromic liquid to enhance uniformity during film formation. The addition of silicone-based and fluorine-based leveling agents having leveling capability is particularly desirable. The quantity added is not specifically limited. A quantity of 0.01 to 1.0 mass percent of the total quantity of photochromic liquid is normal, and 0.05 to 0.5 mass percent is desirable.

In the present invention, it is desirable not to add the various components that are normally added (adhesives such as coupling agents, or polymerization catalysts of coupling agents) to enhance adhesion to the photochromic liquid. The coating liquid comprising a silane coupling agent and the like reduces the liquid life (pot life) due to self-polymerization during storage of the liquid. Therefore, it is desirable not to comprise such components from the perspective of good operating properties. According to the present invention, a resin layer formed of a water-based coating liquid plays the role of an adhesive layer, so adhesion of the photochromic layer to the lens substrate can be ensured without adding an adhesive to the photochromic liquid.

In the present invention, the method of preparing the photochromic liquid is not specifically limited. The photochromic liquid can be prepared by weighing out and mixing prescribed quantities of the various components. Nor is the order in which the various components are added specifically limited; all the components can be added simultaneously, or just the monomer components can be mixed in advance, with the photochromic dye and other additives being admixed just before polymerization.

The photochromic liquid desirably has a viscosity at 25˚C of 20 to 500 cp, preferably 50 to 300 cp, and more preferably, 60 to 200 cp. Employing a viscosity within this range can facilitate coating for the photochromic liquid and make it easy to obtain a photochromic film of desired thickness.

Following coating of the above photochromic liquid on the resin layer, a curing treatment based on the type of polymerizable component that is contained in the photochromic liquid can be conducted to form a photochromic film. Such curing treatment can be conducted by a known method. The thickness of the photochromic film is desirably equal to or greater than 10 micrometers, preferably 20 to 60 micrometers.

[Reference Aspect A]

The method of coating a water-based coating liquid comprising the above-described two-stage rotating step can be applied without limitation to the method of manufacturing a plastic lens of the present invention.

The method of manufacturing a plastic lens (Reference Aspect A) employing the above-described coating method is a method of manufacturing a plastic lens comprising forming a resin layer on the surface of a plastic lens substrate, which comprises:

a coating step of discharging a water-based coating liquid comprising a resin component and a water-based solvent from the tip of a nozzle and applying a coating in such a manner as to trace a spiral coating path over the surface of the plastic lens substrate while rotating the plastic lens substrate with the surface thereof facing upward;
a first rotating step of rotating the plastic lens substrate, following the coating step, with the surface on which the coating liquid has been coated facing upward; a second rotating step, following the first rotating step, of rotating the plastic lens substrate at a rotational speed exceeding the maximum rotational speed in the first rotational step with the surface on which the coating liquid has been coated facing upward, wherein the second rotating step is begun after at least the outermost surface of the water-based coating liquid that has been coated on the surface has dried.

The maximum rotational speed in the second rotating step may be set within a range of 2 to 5-fold the maximum rotational speed in the first rotating step.

The spiral coating path may be traced from a perimeter portion to a center portion of the surface.

The spiral coating path may be traced so that adjacent coating paths in a radial direction of the surface contact or overlap each other.

The resin component may be a polyurethane resin.
The plastic lens may be an eyeglass lens.
Reference Aspect A may further comprise forming a coating film on the resin layer.
The resin layer may be an adhesive layer.
The coating film may be a photochromic film.
As set forth above, the water-based coating liquid affords the advantages of permitting the formation of a film without a heating step and of releasing the solvent. However, in the course of forming a coating layer by the spin coating method using the above-described water-based coating liquid, there was a problem relating to enhancing the uniformity of the coating film as set forth above. This problem was resolved by the method of manufacturing a plastic lens of the present invention as set forth above. Research conducted by the present inventors has also revealed that the following problems exist in forming a coating layer by spin coating using the above-described water-based coating liquid.
During spin coating, the water-based solvent in the water-based coating liquid that is applied dropwise to the lens surface is removed (scattered) by centrifugal force, causing solidification to progress. Spreading and solidification of the coating liquid proceed simultaneously on the surface of the lens due to centrifugal force. Thus, in the method of dripping coating liquid onto the center portion of the lens and spreading it over the entire surface by means of centrifugal force generated by rotation, as is done in common spin coating, the paths over which the coating liquid has spread remain on the surface of the coating film following solidification and the smoothness of the surface diminishes. Accordingly, it is conceivable to apply coating liquid in a spiral shape on the lens surface as is described in the above-described Japanese Unexamined Patent Publication (KOKAI) No. 2005-218994. However, in contrast to the spiral shaped coating path that can be eliminated by a leveling effect for a coating liquid as described in Japanese Unexamined Patent Publication (KOKAI) No. 2005-218994 that polymerizes and cures following coating, it was found that solidification progressed in the above water-based coating liquid during the coating, and thus irregularities corresponding to the coating path sometimes remained in the coating film that was formed.
As a countermeasure for the above, it is conceivable to rotate the lens with the coating liquid in an undried state following spiral coating of a water-based coating liquid on the surface of a plastic lens. This makes it possible to displace by centrifugal force the coating liquid while it is in an undried state and bury (smooth away) differences in height between irregularities. However, excess liquid tends to accumulate in the perimeter portion on the lens surface due to the centrifugal force generated by rotation. Accordingly, the present inventors devised the method of increasing the rotational speed to generate a greater centrifugal force following the rotating step for smoothing, thereby expelling the excess liquid beyond the lens. However, when the present inventors attempted to form a coating film by the above method, depending on the timing at which the high-speed rotation was commenced, the irregularities (coating traces) corresponding to the spiral coating path or the like that should have been eliminated by the rotation for smoothing sometimes appeared on the surface of the coating film. These irregularities caused nonuniformities in film thickness and compromised optical properties. By contrast, research by the present inventors revealed that the coating traces following high-speed rotation were generated when high-speed rotation was begun while the surface of the coating film was nonuniformly dried. Accordingly, the present inventors discovered that the generation of the coating traces was prevented by conducting high-speed rotation to remove excess liquid after at least the surface of the coating film had assumed a uniformly dry state, that is, once the outermost surface of the coating film had dried. Reference Aspect A was thus devised. According to Reference Aspect A, it is possible to uniformly coat a water-based coating liquid on a plastic lens substrate to form a coating film having excellent optical properties.
Reference Aspect A relates to a method of manufacturing a plastic lens including forming a resin layer on the surface of a plastic lens substrate. Reference Aspect A comprises the following steps:

(1) a coating step of discharging a water-based coating liquid comprising a resin component and a water-based solvent from the tip of a nozzle and conducting coating by tracing a spiral coating path on the surface of a plastic lens substrate being rotated with the surface thereof facing upward;
(2) a first rotating step of rotating the plastic lens substrate, after the coating step, with the surface on which the coating liquid has been coated facing upward; and
(3) a second rotating step of rotating the plastic lens substrate, after the first coating step, at a rotational speed exceeding the maximum rotational speed in the first rotating step with the surface on which the coating liquid has been coated facing upward.

The first rotating step is conducted to smooth the surface and adjust the film thickness by burying the differences in height of irregularities between spiral coating paths while the fluidity of the coating liquid coated on the surface of the lens substrate is relatively high. By contrast, the second coating step is conducted to expel excess fluid that has collected in the perimeter portion of the surface of the lens substrate due to centrifugal force and increase the uniformity of the film thickness. Here, the second rotating step is conducted at a greater speed than the first rotating step in order to generate a greater centrifugal force and expel beyond the lens the excess liquid that has remained on the perimeter

portion of the surface of the lens substrate without being expelled beyond the lens by centrifugal force in the first rotating step.
However, as set forth above, research conducted by the present inventors revealed that when the second rotating step was begun while the outermost surface of the coating liquid was in a nonuniformly dry state following the first rotating step, irregularities similar to the spiral coating traces that should have been eliminated in the first coating step sometimes appeared on the surface of the coating film. Optically, these irregularities functioned as concave and convex lenses, and were thus found to impart distortion and differences in brightness to the image transmitted. When such distortion and differences in brightness became so clear as to be visible to the eye, use of the lens as an eyeglass lens became difficult.
Accordingly, in Reference Aspect A, the second rotating step is begun after the drying state of the water-based coating liquid that has been coated on the surface of the lens substrate has become uniform, that is, after the surface of the water-based coating liquid has dried. Thus, the excess liquid on the perimeter portion of the surface of the lens substrate is removed and a plastic lens with excellent optical properties in which the generation of coating traces has been prevented and which is of uniform thickness, can be obtained. The present inventors presume that the reasons why coating traces appear when the second rotating step is begun while the outermost surface of the coating liquid is in an undried state are as stated in coating trace formation hypotheses 1 and 2 above. By contrast, it is conceivable to remove the excess liquid on the perimeter portion of the lens while maintaining a smooth surface shape by beginning the second rotating step with the surface of the coating liquid dry and in a state of having lost nearly all fluidity. The reason why the excess liquid on the perimeter portion can be removed while maintaining a smooth surface shape by high-speed rotation after having dried the surface of the coating liquid is thought to lie in the fact that the centrifugal force that is exerted on the coating liquid on the lens increases with proximity to the perimeter portion.
Reference Aspect A will be described in greater detail below.

Coating step

In the coating step, a water-based coating liquid is coated so as to trace a spiral coating path on the surface of a lens substrate. To trace a spiral coating path, it suffices to horizontally displace the nozzle over a rotating lens substrate. The spiral coating path can be traced from the center portion to the perimeter portion of the surface of the lens substrate, but is desirably traced from the perimeter portion to the center portion (outside to inside) in the manner of the method of manufacturing a plastic lens of the present invention. Coating from outside to inside on the surface of the lens substrate allows the coating liquid that is on the perimeter portion of the surface of the lens substrate that has been coated first and has undergone solidification to serve as a wall that is capable of preventing liquid that is spread by centrifugal force during the subsequent first coating step from scattering beyond the perimeter portion. Thus, liquid can be uniformly spread over the surface of the lens substrate in the first rotating step, making it possible to achieve uniform film thickness and a smooth surface. The coating step in Reference Aspect A is desirably conducted in the same manner as the coating step in the method of manufacturing a plastic lens of the present invention. The details thereof are as set forth above.

First rotating step

The first rotating step in Reference Aspect A can be conducted in the same manner as described for the method of manufacturing a plastic lens of the present invention. As set forth above, when the coating is applied from outside to inside on the surface of the lens substrate in the coating step, the coating liquid on the perimeter portion of the surface of the lens substrate that has been coated first and undergone solidification serves as a wall, preventing the liquid that is spread during the rotating step from scattering beyond the perimeter portion. Since the liquid can be uniformly spread on the surface of the lens substrate, it is desirable to conduct coating from outside to inside in the coating step to achieve uniform film thickness and a smooth surface.

Second rotating step

This step is begun after at least the outermost surface of the water-based coating liquid that has been coated on the surface of the lens substrate has dried so as to prevent coating traces as set forth above. The details of the second rotating step in Reference Aspect A are as set forth above for the method of manufacturing a plastic lens of the present invention.
Through the above-described steps and conducting, as needed, a drying step such as air drying, it is possible to form a resin layer on the surface of a lens substrate. The thickness of the resin layer that is formed is not specifically limited. However, a plastic lens having a resin layer that is about 0.5 to 50 micrometers in thickness with excellent thickness uniformity and surface smoothness can be obtained according to Reference Aspect A. The plastic lens substrate

and water-based coating liquid employed in Reference Aspect A, as well as other details, are as set forth above in the description of the method of manufacturing a plastic lens of the present invention.

EXAMPLES

The present invention is further described below through Examples. However, the present invention is not limited to the embodiments shown in the Examples.

[Example 1 (Aspect I)]

1. Formation of a resin layer

(1) Setting the coating conditions

Meniscus-shaped polythiourethane (made by HOYA CORPORATION), product name EYAS, center thickness 2.0 mm, radius 75 mm, surface curvature of convex surface (average) of about + 0.8) was employed as the plastic lens substrate. Water-based polyurethane resin liquid (polycarbonate polyol-based polyurethane emulsion, viscosity 100 CPS, solid component concentration 38 mass percent) was employed as the primer liquid. Coating conditions for forming a primer layer were determined by the following method. A coating nozzle 0.2 mm in diameter was employed. The discharge level was 0.1 g/sec. The discharge rate was 3,360 mm/sec. Further, the lens substrate was alkali treated by immersion for 5 to 6 minutes in an aqueous solution of 10 mass percent sodium hydroxide, and then dried with 80˚C warm air. The contact angle of the above water-based polyurethane resin liquid for the convex surface of the lens following drying was measured at 54˚.

(a) Determining the critical perimeter speed for dispensing

Following the above alkali treatment, the lens substrate was positioned on a spin coater with the convex surface facing vertically upward, and the lens was rotated while varying the rotational speed over a range of 200 to 1,200 rpm. The above water-based polyurethane resin liquid was discharged through a discharge nozzle onto the convex surface of the lens while it was being rotated and the resin liquid was made to flow out so that a spiral coating path was traced from the perimeter portion to the center portion of the convex surface of the lens. After air drying, the coating line width was measured by microscopy. Fig. 9 shows the relation between the perimeter speed of the lens and the coating line width. Here, to determine the effect of the distance between the convex surface of the lens and the tip of the nozzle, this distance was varied from 6 mm to 12 mm and 18 mm, and data were collected.
As shown in Fig. 9, the coating line width was successfully measured at lens perimeter speeds of up to 2,000 mm/sec, beyond which the liquid was repelled by the lens surface and the resin liquid could not be dispensed onto the convex surface of the lens. Based on this result, the critical perimeter speed for dispensing was determined to be 2,000 mm/sec. From the results in Fig. 9, it was also determined that the distance between the convex surface of the lens and the tip of the nozzle did not have a major effect on the coating line width.

(b) Determining the rotational speed at each radius

The rotational speed at each radius was determined using equation (1) above from the critical perimeter speed for dispersing determined in (a) above.

(c) Calculating the perimeter speed at each radius

The lens perimeter speed at each radius was calculated using equation (2) above from the rotational speed determined in (b) above.

(d) Determining the spiral pitch

The coating line width at each lens perimeter speed calculated in (c) above was read from the graph shown in Fig. 9. The values that were read were multiplied by a safety factory (80 percent) to obtain values that were employed as the spiral pitch.

(e) Determining the horizontal nozzle displacement rate

A (horizontal) nozzle displacement rate was determined for each radius from the rotational speed obtained in (b) above and the spiral pitch obtained in (d) above. As shown in Fig. 9, the distance between the tip of the nozzle and the convex surface of the lens did not greatly affect the coating line width, so the vertical nozzle position was kept constant and the nozzle was displaced only horizontally.
The coating conditions determined in (a) to (e) above are shown in Table 1 below.
[Table 1]

| Distance from geometric center of lens convex surface (mm) | Rotational speed (rpm) | Peripheral speed (mm/sec) | Spiral pitch (mm) | Horizontal nozzle displacement rate (mm/sec) |
|---|---|---|---|---|
| 40-35 | 400 | 1676 | 0.384 | 2.56 |
| 35-30 | 500 | 1833 | 0.384 | 3.20 |
| 30-25 | 600 | 1885 | 0.384 | 3.84 |
| 25-20 | 700 | 1833 | 0.384 | 4.48 |
| 20-15 | 800 | 1676 | 0.384 | 5.12 |
| 15-10 | 800 | 1257 | 0.456 | 6.08 |
| 10-5 | 800 | 838 | 0.560 | 7.47 |
| 5-0 | 800 | 419 | 0.672 | 8.96 |

Coating the resin liquid

The polyurethane resin liquid was coated under the coating conditions shown in Table 1 onto the convex surface of the lens substrate by tracing a spiral coating path from the perimeter portion to the center portion of the convex surface. The convex surface of the lens was visually observed following the coating, revealing that it had been coated such that adjacent coating paths overlapped and there were no gaps in the spiral pitch.

(3) Rotating step

The above lens was rotated for 30 seconds at a rotational speed of 800 rpm on a spin coater following coating. Subsequently, it was air dried for 15 minutes, yielding a lens having a resin layer. The thickness of the resin layer that was formed was 6.5 to 8.5 micrometers.

[Reference Example 1]

With the exception that the coating step was conducted under the coating conditions indicated in Table 2 below, a lens having a resin layer was obtained by the same method as in Example 1. Visual inspection of the convex surface of the lens following the coating step revealed that gaps were present in the spiral pitch. These gaps remained after the rotating step.
[Table 2]

| Distance from geometric center of lens convex surface (mm) | Rotational speed (rpm) | Peripheral speed (mm/sec) | Spiral pitch (mm) | Horizontal nozzle displacement rate (mm/sec) |
|---|---|---|---|---|
| 40-35 | 400 | 1676 | 0.72 | 4.80 |
| 35-30 | 500 | 1833 | 0.72 | 6.00 |

(continued)

| Distance from geometric center of lens convex surface (mm) | Rotational speed (rpm) | Peripheral speed (mm/sec) | Spiral pitch (mm) | Horizontal nozzle displacement rate (mm/sec) |
|---|---|---|---|---|
| 30-25 | 600 | 1885 | 0.72 | 7.20 |
| 25-20 | 700 | 1833 | 0.72 | 8.40 |
| 20-15 | 800 | 1676 | 0.72 | 9.60 |
| 15-10 | 800 | 1257 | 0.86 | 11.40 |
| 10-5 | 800 | 838 | 1.05 | 14.00 |
| 5-0 | 800 | 419 | 1.26 | 16.80 |

Figs. 10(a) and (b) show photographs taken by digital camera of the convex surface of the lens produced in Example 1 and the convex surface of the lens produced in Reference Example 1. The measurement positions were positions about 20 mm from the geometric centers of the lenses. The scale was a 5 mm square. The coated surfaces were photographed with digital cameras under fluorescent lighting indoors using reflected light from a fluorescent lamp. As shown in Fig. 10(a), the lens prepared in Example 1 exhibited the formation of a uniform resin layer with no coating nonuniformity. By contrast, as shown in Fig. 10(b), the presence of coating nonuniformity precluded the formation of part of the resin layer, making it impossible to form a resin layer of uniform thickness on the surface of the lens prepared in Reference Example 1.

[Example 2]

A resin layer was formed by the same method as in Example 1. Subsequently, a photochromic film was formed by the following method over the resin layer that had been formed.

(i) Preparing a photochromic coating liquid

In a plastic vessel, to 100 weight parts of radical polymerizable monomer comprised of 20 mass parts of trimethylol propane trimethacrylate, 35 mass parts of BPE oligomer (2,2-bis(4-methacryloyloxypolyethoxyphenyl)propane), 10 mass parts of EB6A (polyester oligomer hexacrylate), 10 mass parts of polyethylene glycol diacrylate with an average molecular weight of 532, and 10 mass parts of glycidyl methacrylate were added 3 mass parts of a photochromic dye in the form of Chromene 1 set forth below, 5 mass parts of an optical stabilizer in the form of LS765 (bis(1,2,2,6,6-pentamethyl-4-piperidyl)sebacate and methyl(1,2,2,6,6_pentamethyl-4-piperidyl)sebacate), 5 mass parts of the hindered phenol-based oxidation inhibitor Irganox 245 (made by Ciba Specialty Chemicals), and 0.8 mass part of a UV polymerization initiator in the form of CGI-1870 (made by Ciba Specialty Chemicals). The mixture was thoroughly stirred. To this composition, γ-methacryloyloxypropyl trimethoxysilane (KBM503 made by Shin-Etsu Chemical Co., Ltd.) was added dropwise while stirring. Subsequently, 0.1 mass part of silicone-based leveling agent Y-7006 (polyoxyalkylene dimethylpolysiloxane copolymer, made by Dow Coming Toray Co., Ltd.)) was admixed. The mixture was then degassed for 2 minutes in a rotating and revolving-type stirring and degassing device (AR-250 made by Thinky Corporation) to obtain a curable composition having a photochromic property.

[Chem. 9]

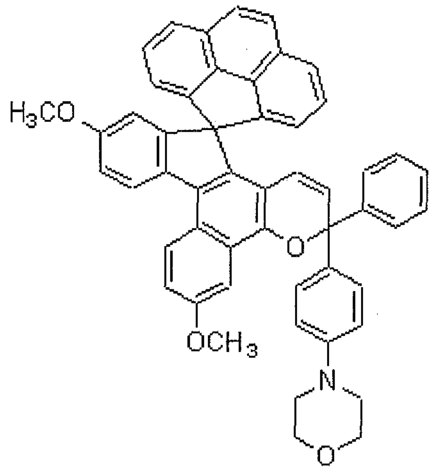

Forming a photochromic film

The curable composition prepared in (i) was coated by spin coating on the above resin layer. The spin coating was conducted by the method described in Japanese Unexamined Patent Publication (KOKAI) No. 2005-218994. Subsequently, the lens was irradiated in a nitrogen atmosphere (with an oxygen concentration of 500 ppm or lower) with a cumulative UV radiation dose of 1,800 mJ/cm$^2$ (100 mW/cm$^2$, 3 minutes) using a 405 nm wavelength UV lamp (D valve) made by Fusion, and then cured for 60 minutes at 100˚C to obtain a plastic lens having a photochromic coating layer. A crosshatch test was conducted to evaluate adhesion between the lens substrate and the photochromic film, resulting in a good result of 100/100.

[Comparative Example 1]

The same lens substrate and resin liquid were employed as in Example 1. The coating liquid was applied dropwise to the center of a convex lens being rotated on a spin coater in an attempt to coat the resin liquid by spin coating. The surface of the lens following spin coating was photographed by digital photography using the method set forth above. The photograph is shown in Fig. 11. As revealed in Fig. 11, it was impossible to coat the coating liquid on the surface of the lens. This was because the coating liquid ended up being repelled by the lens surface.

[Examples A1 to A24 (Aspect I, Reference Aspect A), Examples B1 to B48 (Aspect I)]

1. Forming a resin layer

(1) Applying the resin liquid

The coating conditions set in Example 1 were adopted. A resin liquid identical to the polyurethane resin liquid employed in Example 1 was coated on the convex surface of a lens substrate that had been treated in the same manner as in Example 1 by tracing a spiral coating path from the perimeter portion to the center portion of the convex surface. Visual inspection of the convex surface of the lens following the coating revealed that adjacent coating paths overlapped and a coating without gaps in the spiral pitch had been obtained.

(2) First rotating step

(i) Preliminary testing

In preliminary testing, after coating a coating liquid by the same method as that set forth above, rotating was continued for a maximum of 80 seconds at rotational speeds of 800 rpm, 1,000 rpm, 1,200 rpm, and 1,400 rpm at the humidity indicated in Table 3, and the time required for the surface of the coating liquid coated on the convex surface of the lens to dry was measured. The fact that the surface of the coating liquid had dried was determined visually. The results are given in Table 3 below.

[Table 3]

| Humidity 40%RH | | Humidity 50%RH | | Humidity 60%RH | |
|---|---|---|---|---|---|
| Rotational speed (rpm) | Rotation time required for the surface of the coating liquid to dry (sec.) | Rotational speed (rpm) | Rotation time required for the surface of the coating liquid to dry (sec.) | Rotational speed (rpm) | Rotation time required for the surface of the coating liquid to dry (sec.) |
| 800 | 42 | 800 | 56 | 800 | - |
| 1000 | 42 | 1000 | 42 | 1000 | 56 |
| 1200 | 30 | 1200 | 42 | 1200 | 42 |
| 1400 | 30 | 1400 | 30 | 1400 | 30 |

(ii) Conducting the first rotating step

The above coated lens was placed on a spin coater and rotated at the rotational speed and for the rotation period indicated in Table 4.

(3) Second rotating step

Following the above coating step, lenses that had been rotated at the rotational speeds and for the rotation periods indicated in Table 4 at the humidity indicated in Table 4 were subjected to further rotation at rotational speeds increased to the values indicated in Table 4 for the periods indicated in Table 4. Plastic lenses with resin layers were thus obtained. The first and second rotating steps were conducted at the humidity levels indicated in Table 4.
The plastic lenses obtained were evaluated by the following methods.

(a) Presence of coating traces

A visual inspection was conducted to determine whether or not spiral coating traces were present in the resin layers that had been formed. The results are given in Table 4.

(b) Measurement of differences in film thickness

The thickness of the resin layers that were formed was measured at the center portion (in the vicinity of the geometric center of the lens) and at the perimeter portion (about 10 mm inward from the outer perimeter of the lens) with a Z5FM-C300SE optical film thickness measuring device made by Omron. The results are given in Table 4. The smaller the difference in film thickness for the same rotational speed, the better the uniformity of film thickness. Since the film thickness decreased as the rotational speed increased, causing the difference in film thickness to decrease, it was not possible to determine the uniformity of the film thickness from just the values of the difference in film thickness for tests conducted at different rotational speeds. However, for example, a difference in film thickness of equal to or less than 0.5 micrometer was desirable, and equal to or less than 0.2 micrometer was preferred.
[Table 4]

| | Humidity 40%RH | | | | | | |
|---|---|---|---|---|---|---|---|
| | First coating step | | Second coating step | | Film thickness Center portion / perimeter portion (µm) | Difference in film thickness (µm) | Presence of coating traces Not present: ○ Present: × |
| | Rotational speed (rpm) | Rotation period (Sec.) | Rotational speed (rpm) | Rotation period (Sec.) | | | |
| Example B1 | 800 | 6 | 4000 | 0.5 | 7.01/5.88 | 1.13 | ○ |
| Example B2 | | 12 | | | 7.74/6.60 | 1.14 | ○ |
| Example B3 | | 24 | | | 9.02/8.27 | 0.74 | ○ |
| Example B4 | | 36 | | | 8.28/9.23 | 0.05 | × |
| Example A1 | | 48 | | | 9.26/9.27 | 0.01 | ○ |
| Example A2 | | 60 | | | 9.21/9.23 | 0.01 | ○ |
| Example B5 | 1000 | 6 | 4000 | 0.5 | 6.88/5.81 | 1.07 | ○ |
| Example B6 | | 12 | | | 7.40/6.43 | 0.97 | ○ |
| Example B7 | | 24 | | | 8.16/7.96 | 0.20 | × |
| Example B8 | | 36 | | | 8.22/8.21 | 0.02 | × |
| Example A3 | | 48 | | | 8.18/8.18 | 0.00 | ○ |
| Example A4 | | 60 | | | 8.26/8.20 | 0.06 | ○ |
| Example B9 | 1200 | 6 | 4000 | 0.5 | 6.66/5.74 | 0.92 | ○ |
| Example B10 | | 12 | | | 7.11/6.40 | 0.71 | ○ |
| Example B11 | | 24 | | | 7.48/7.41 | 0.07 | × |
| Example A5 | | 36 | | | 7.54/7.42 | 0.12 | ○ |
| Example A6 | | 48 | | | 7.51/7.44 | 0.08 | ○ |
| Example A7 | | 60 | | | 7.46/7.38 | 0.08 | ○ |
| Example | 1400 | 6 | 4000 | 0.5 | 6.38/5.60 | 0.77 | ○ |

(continued)

| | Humidity 40%RH | | | | | | |
|---|---|---|---|---|---|---|---|
| | First coating step | | Second coating step | | Film thickness Center portion / perimeter portion (μm) | Difference in film thickness (μm) | Presence of coating traces Not present: ○ Present: × |
| | Rotational speed (rpm) | Rotation period (Sec.) | Rotational speed (rpm) | Rotation period (Sec.) | | | |
| B12 | | | | | | | |
| Example B13 | | 12 | | | 6.71/6.26 | 0.45 | ○ |
| Example B14 | | 24 | | | 6.90/6.79 | 0.11 | × |
| Example A8 | | 36 | | | 6.92/6.79 | 0.13 | ○ |
| Example A9 | | 48 | | | 6.92/6.81 | 0.12 | ○ |
| Example A10 | | 60 | | | 6.99/6.81 | 0.18 | ○ |

| | Humidity 50%RH | | | | | | |
|---|---|---|---|---|---|---|---|
| | First coating step | | Second coating step | | Film thickness Center portion / perimeter portion (μm) | Difference in film thickness (μm) | Presence of coating traces Not present:○ Present: × |
| | Rotational speed (rpm) | Rotation period (Sec.) | Rotational speed (rpm) | Rotation period (Sec.) | | | |
| Example B15 | 800 | 6 | 4000 | 0.5 | 6.84/5.77 | 1.07 | ○ |
| Example B16 | | 12 | | | 7.28/6.15 | 1.13 | ○ |
| Example B17 | | 24 | | | 8.32/7.47 | 0.85 | ○ |
| Example B18 | | 36 | | | 8.68/8.41 | 0.27 | × |
| Example B19 | | 48 | | | 8.71/8.64 | 0.07 | × |
| Example A11 | | 60 | | | 8.72/8.68 | 0.04 | ○ |
| Example B20 | 1000 | 6 | 4000 | 0.5 | 6.65/5.61 | 1.03 | ○ |
| Example B21 | | 12 | | | 6.97/6.01 | 0.95 | ○ |
| Example B22 | | 24 | | | 7.58/7.16 | 0.42 | ○ |

(continued)

| | Humidity 50%RH | | | | | | |
|---|---|---|---|---|---|---|---|
| | First coating step | | Second coating step | | Film thickness Center portion / perimeter portion (μm) | Difference in film thickness (μm) | Presence of coating traces Not present:○ Present: × |
| | Rotational speed (rpm) | Rotation period (Sec.) | Rotational speed (rpm) | Rotation period (Sec.) | | | |
| Example B23 | | 36 | | | 7.75/7.65 | 0.10 | × |
| Example A12 | | 48 | | | 7.73/7.69 | 0.04 | ○ |
| Example A13 | | 60 | | | 7.75/7.68 | 0.07 | ○ |
| Example B24 | 1200 | 6 | 4000 | 0.5 | 6.40/5.51 | 0.89 | ○ |
| Example B25 | | 12 | | | 6.63/5.90 | 0.73 | ○ |
| Example B26 | | 24 | | | 6.99/6.79 | 0.20 | × |
| Example B27 | | 36 | | | 7.09/6.93 | 0.11 | × |
| Example A14 | | 48 | | | 7.05/6.95 | 0.10 | ○ |
| Example A15 | | 60 | | | 7.02/6.93 | 0.08 | ○ |
| Example B28 | 1400 | 6 | 4000 | 0.5 | 6.16/5.38 | 0.78 | ○ |
| Example B29 | | 12 | | | 6.31/5.80 | 0.51 | ○ |
| Example B30 | | 24 | | | 6.53/6.29 | 0.24 | × |
| Example A16 | | 36 | | | 6.43/6.33 | 0.10 | ○ |
| Example A17 | | 48 | | | 6.54/6.39 | 0.15 | ○ |
| Example A18 | | 60 | | | 6.56/6.43 | 0.13 | ○ |

| | Humidity 60%RH | | | | | | |
|---|---|---|---|---|---|---|---|
| | First coating step | | Second coating step | | Film thickness Center portion/ | Difference in film thickness (μm) | Presence of coating traces Not |
| | Rotational speed | Rotation period | Rotational speed | Rotation period | | | |

(continued)

| | (rpm) | (Sec.) | (rpm) | (Sec.) | perimeter portion (µm) | | present:○ Present: × |
|---|---|---|---|---|---|---|---|
| Example B31 | 800 | 6 | 4000 | 0.5 | 6.91/5.82 | 1.09 | ○ |
| Example B32 | | 12 | | | 7.12/5.94 | 1.18 | ○ |
| Example B33 | | 24 | | | 8.21/7.77 | 0.44 | ○ |
| Example B34 | | 36 | | | 8.19/7.74 | 0.45 | ○ |
| Example B35 | | 48 | | | 8.32/8.09 | 0.23 | × |
| Example B36 | | 60 | | | 8.29/8.24 | 0.06 | × |
| Example B37 | 1000 | 6 | 4000 | 0.5 | 6.94/5.40 | 1.53 | ○ |
| Example B38 | | 12 | | | 6.67/5.73 | 0.94 | ○ |
| Example B39 | | 24 | | | 7.14/6.56 | 0.58 | ○ |
| Example B40 | | 36 | | | 7.41/7.16 | 0.25 | × |
| Example B41 | | 48 | | | 7.41/7.31 | 0.10 | × |
| Example A19 | | 60 | | | 7.36/7.27 | 0.09 | ○ |
| Example B42 | 1200 | 6 | 4000 | 0.5 | 6.19/5.25 | 0.94 | ○ |
| Example B43 | | 12 | | | 6.32/5.57 | 0.75 | ○ |
| Example B44 | | 24 | | | 6.66/6.29 | 0.37 | × |
| Example B45 | | 36 | | | 6.72/6.64 | 0.08 | × |
| Example | | 48 | | | 6.75/6.68 | 0.07 | ○ |
| A20 | | | | | | | |
| Example A21 | | 60 | | | 6.79/6.66 | 0.13 | ○ |

(continued)

| | (rpm) | (Sec.) | (rpm) | (Sec.) | perimeter portion (μm) | | present:○ Present: × |
|---|---|---|---|---|---|---|---|
| Example B46 | 1400 | 6 | 4000 | 0.5 | 6.00/5.15 | 0.85 | ○ |
| Example B47 | | 12 | | | 6.09/5.45 | 0.65 | ○ |
| Example B48 | | 24 | | | 6.33/6.11 | 0.22 | × |
| Example A22 | | 36 | | | 6.38/6.22 | 0.17 | ○ |
| Example A23 | | 48 | | | 6.27/6.14 | 0.13 | ○ |
| Example A24 | | 60 | | | 6.35/6.23 | 0.11 | ○ |

When the lenses produced in Examples A1 to A24 and B1 to B48 were observed indoors under fluorescent lamps, none exhibited coating nonuniformities. Further, as shown in Table 4, in Examples A1 to A24, in which the second rotating step was begun after the state of dryness of the surface of the coating liquid had become uniform (after the outermost surface had dried), resin layers having more uniform film thicknesses with no spiral coating traces could be formed.

[Example A25]

A photochromic film was formed by the same method as in Example 2 on the resin layers of the plastic lenses of Examples A1 to A24 to obtain photochromic lenses having photochromic coating layers.
Evaluation of adhesion between the lens substrate and the photochromic film that was conducted by crosshatch testing produced good results of 100/100.

The method of manufacturing a plastic lens of the present invention and Reference Aspect A were suitable as methods of manufacturing eyeglass lenses having functional films such as photochromic films.

[Fig. 1] Fig. 1 shows a typical diagram of a spiral coating path.
[Fig. 2] Fig. 2 shows a partially enlarged typical diagram of the coating path of Fig. 2.
[Fig. 3] Fig. 3 shows an example of a coating device that can be used to coat a water-based coating liquid.
[Fig. 4] Fig. 4 is a distribution diagram of S degrees (average degrees) in a progressive multifocal lens.
[Fig. 5] Fig. 5 is a distribution diagram of C degrees (cylinder degrees) in a progressive multifocal lens.
[Fig. 6] Fig. 6 is a top view corresponding to the S degree distribution in Fig. 4.
[Fig. 7] Fig. 7 is a top view corresponding to the C degree distribution in Fig. 5.
[Fig. 8a] Fig. 8a is a drawing showing the cross-section of a progressive dioptric power plastic lens.
[Fig. 8b] Fig. 8b is a drawing showing the cross-section of a progressive dioptric power glass lens.
[Fig. 9] Fig. 9 is a graph showing the relation between lens peripheral speed and coating line width.
[Fig. 10] Fig. 10(a) shows a digital camera photograph of the lens prepared in Example 1 and Fig. 10(b) shows a digital camera photograph of the lens prepared in Reference Example 1.
[Fig. 11] Fig. 11 is a digital camera photograph of the surface of the lens following coating in Comparative Example 1.

## Claims

**1.** A method of manufacturing a plastic lens comprising forming a resin layer on a surface of a plastic lens substrate, which comprises:

coating a water-based coating liquid comprising a resin component and a water-based solvent by discharging

the water-based coating liquid from a tip of a nozzle onto the surface of the plastic lens substrate being rotated with the surface facing upward, so that a spiral coating path is traced from a perimeter portion to a center portion of the surface as well as so that adjacent coating paths in a radial direction of the surface contact or overlap each other, and
forming the resin layer by rotating the plastic lens substrate after the coating with the surface on which the coating liquid has been coated facing upward to remove at least a portion of the water-based solvent comprised in the coating liquid.

**2.** The method of manufacturing according to claim 1, wherein
the forming of the resin layer comprises a first rotating step in which the plastic lens substrate after the coating is rotated with the surface on which the coating liquid has been coated facing upward and a second rotating step in which the plastic lens substrate after the first rotating step is rotated, with the surface on which the coating liquid has been coated facing upward, at a rotational speed exceeding a maximum rotational speed in the first rotating step, and
the second rotating step is begun after at least an outermost surface of the water-based coating liquid that has been coated on the surface has dried.

**3.** The method of manufacturing according to claim 2, wherein
a maximum rotational speed in the second rotating step is set within a range of 2 to 5-fold the maximum rotational speed in the first rotating step.

**4.** The method of manufacturing according to any of claims 1 to 3, wherein a viscosity of the coating liquid ranges from 10 to 200 CPS.

**5.** The method of manufacturing according to any of claims 1 to 4, wherein the coating liquid is discharged from the tip of the nozzle at a discharge rate ranging from 200 to 4693 mm/sec.

**6.** The method of manufacturing according to any of claims 1 to 5, wherein at least one from among the group consisting of a quantity of the coating liquid that is discharged from the tip of the nozzle, a displacement rate of the nozzle, and a rotational speed of the plastic lens substrate is controlled so that a quantity of the coating liquid coated per unit area on the surface is approximately rendered uniform.

**7.** The method of manufacturing according to any of claims 1 to 6, comprising horizontally displacing the nozzle discharging the coating liquid from an area above the perimeter portion toward an area above the center portion of the surface.

**8.** The method of manufacturing according to claim 7, wherein a rate of displacement of the nozzle is continuously increased or increased in stages.

**9.** The method of manufacturing according to any of claims 1 to 8, wherein a rotational speed of the plastic lens substrate during the coating is continuously increased or increased in stages.

**10.** The method of manufacturing according to any of claims 1 to 9, wherein the resin component is a polyurethane resin.

**11.** The method of manufacturing according to any of claims 1 to 10, wherein the surface is a convex surface comprising a curved surface with a surface curvature ranging from -8 to +8.

**12.** The method of manufacturing according to any of claims 1 to 11, wherein the plastic lens is an eyeglass lens.

**13.** The method of manufacturing according to any of claims 1 to 12, further comprising forming a coating film on the resin layer.

**14.** The method of manufacturing according to claim 13, wherein the resin layer is an adhesive layer.

**15.** The method of manufacturing according to claim 13 or 14, wherein the coating film is a photochromic film.

[Fig. 1]

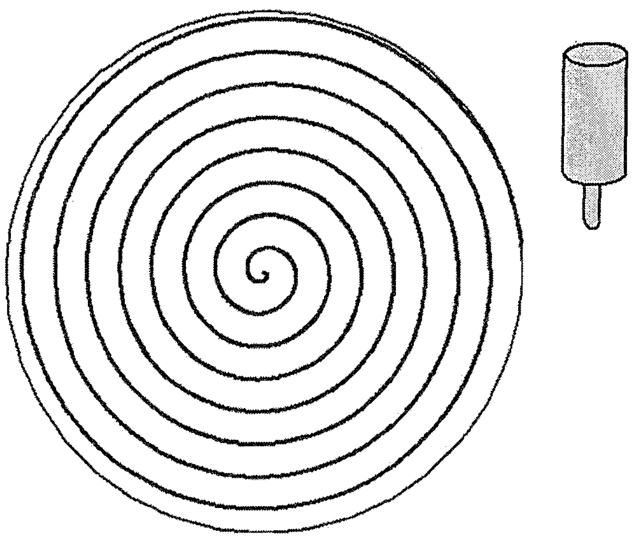

[Fig. 2]

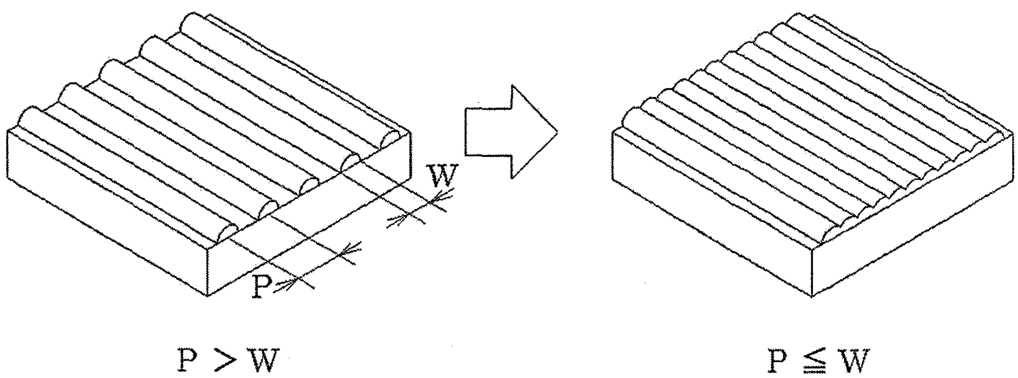


P: Spiral pitch, W: Coating line width

[Fig. 3]

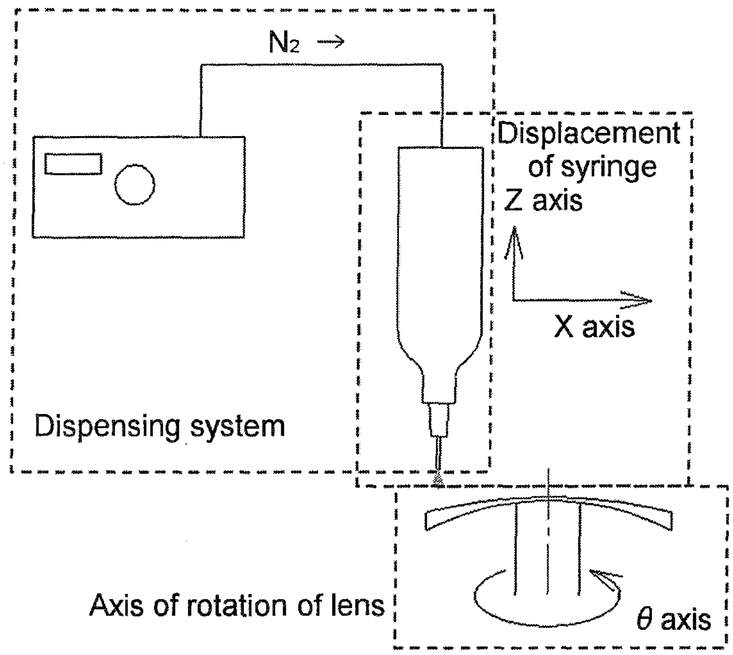
N2 →
Displacement of syringe
Z axis
X axis
Dispensing system
Axis of rotation of lens
θ axis

[Fig. 4]

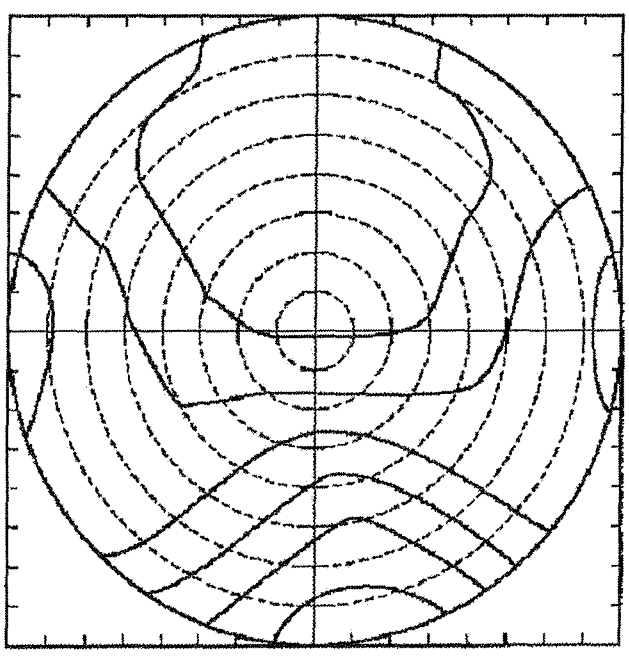

[Fig. 5]

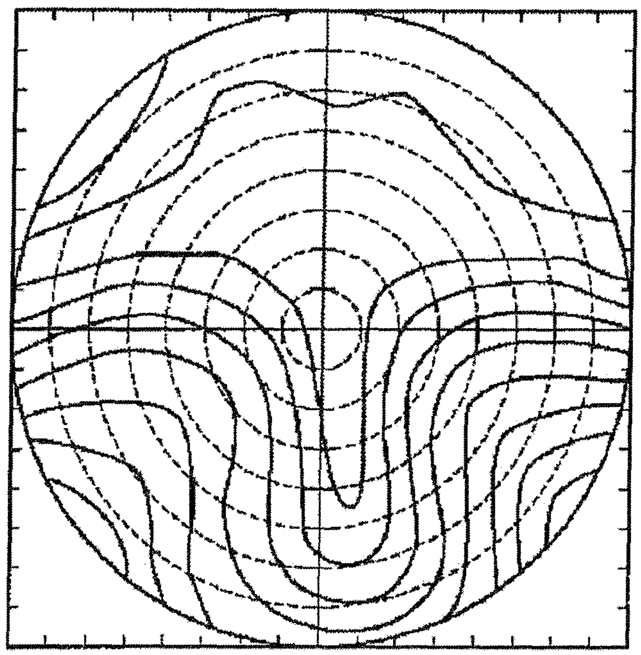

[Fig. 6]

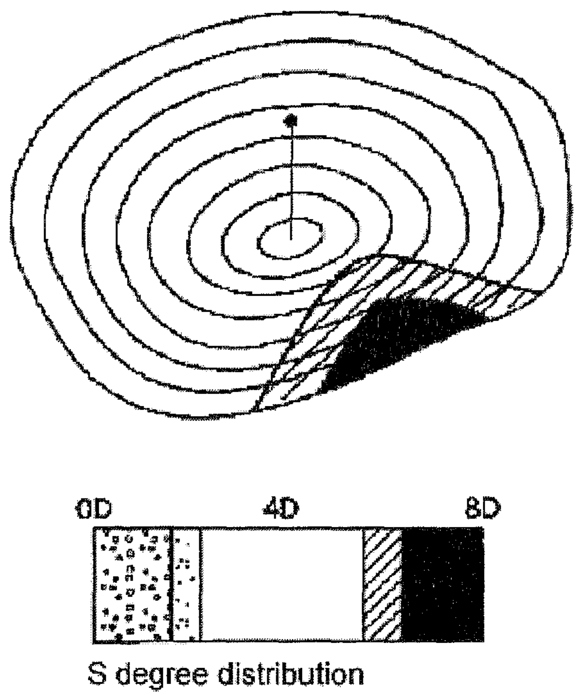

[Fig. 7]

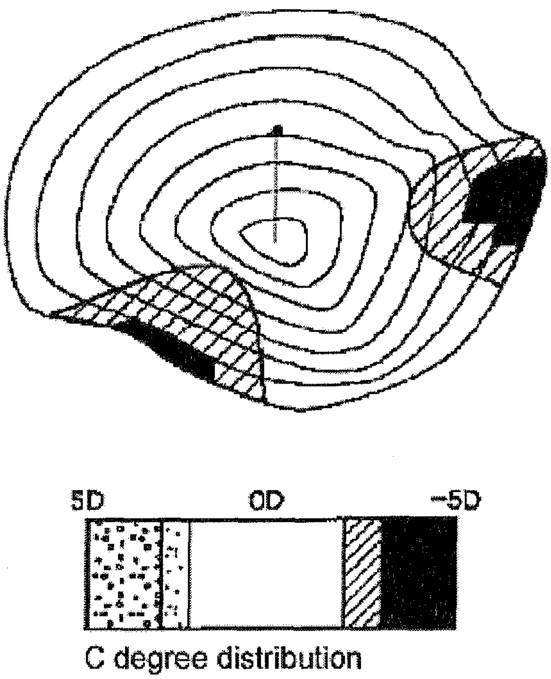


[Fig. 8a]

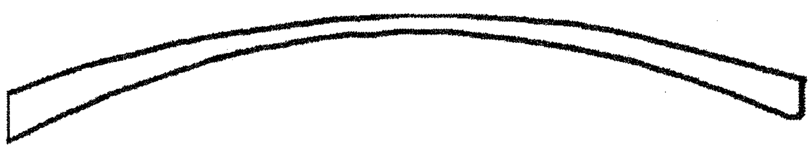

[Fig. 8b]

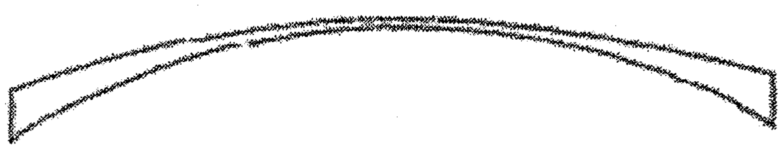

[Fig. 9]

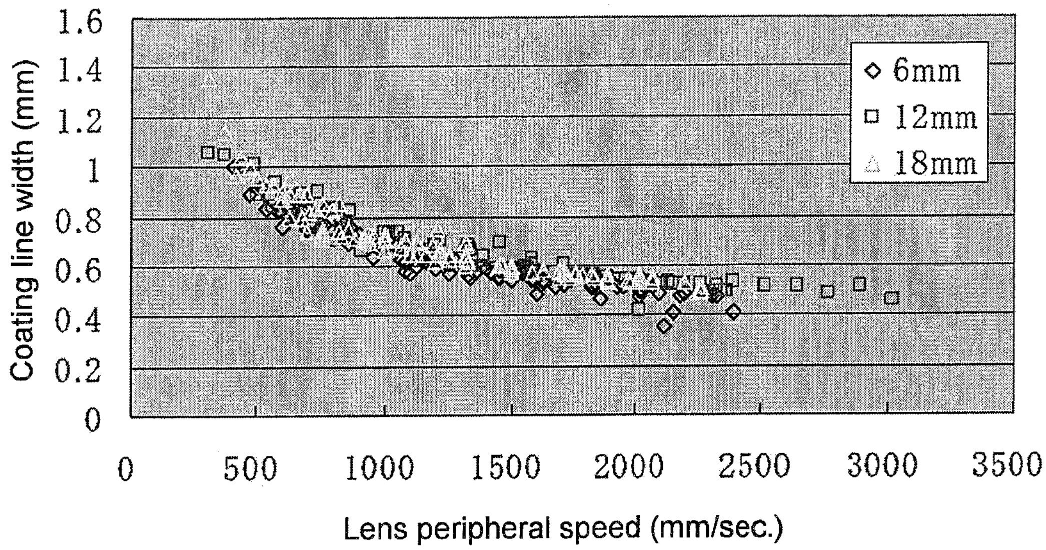


[Fig. 10]

(a)

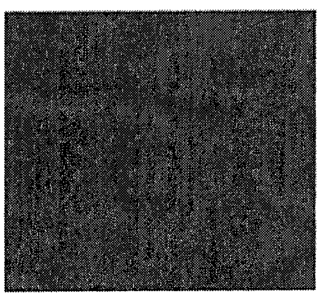

(b)

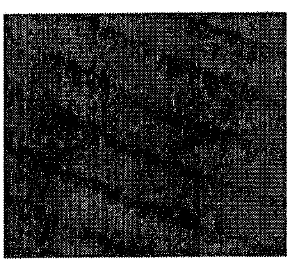

[Fig. 11]

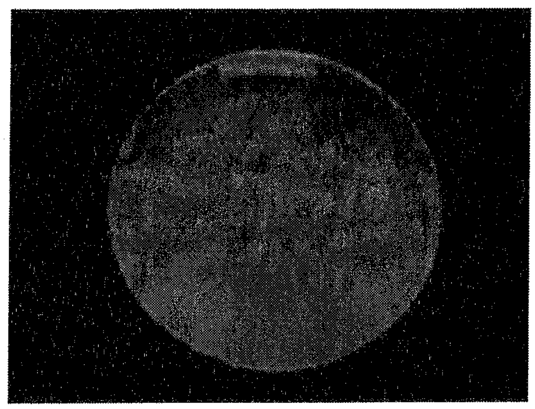

**INTERNATIONAL SEARCH REPORT**

International application No.
PCT/JP2008/064752

A. CLASSIFICATION OF SUBJECT MATTER
*G02C7/02*(2006.01)i, *G02B3/00*(2006.01)i, *G02B5/23*(2006.01)i, *G02C7/10*(2006.01)i

According to International Patent Classification (IPC) or to both national classification and IPC

B. FIELDS SEARCHED

Minimum documentation searched (classification system followed by classification symbols)
G02C7/02, G02B3/00, G02B5/23, G02C7/10, B05D1/26

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2002-055202 A (Seiko Epson Corp.), 20 February, 2002 (20.02.02), Claim 1; Par. Nos. [0002], [0004], [0005], [0053], [0055], [0056] (Family: none) | 1-15 |

☒ Further documents are listed in the continuation of Box C.　☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>12 November, 2008 (12.11.08) | Date of mailing of the international search report<br>25 November, 2008 (25.11.08) |
| Name and mailing address of the ISA/<br>Japanese Patent Office<br>Facsimile No. | Authorized officer<br><br>Telephone No. |

Form PCT/ISA/210 (second sheet) (April 2007)

**INTERNATIONAL SEARCH REPORT**

International application No. PCT/JP2008/064752

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2004-527112 A (Silicon Valley Group, Inc.), 02 September, 2004 (02.09.04), Claims 2 to 3, 6; Par. Nos. [0075], [0076]; Figs. 24, 25 & US 2002/0004100 A1 & US 2002/0098283 A1 & US 6238735 B1 & US 5954878 A & US 5670210 A & US 2001/0001746 A1 & US 6191053 B1 & US 2002/0127334 A1 & EP 1364255 A & WO 2002/071153 A2 & CN 1503928 A & CN 1503929 A & CN 1900823 A & CN 1912744 A & AU 7957498 | 1-15 |
| Y | JP 6-004910 A (Sharp Corp.), 14 January, 1994 (14.01.94), Par. Nos. [0017], [0018], [0020] (Family: none) | 2-3 |
| Y | JP 2002-361167 A (Tokyo Electron Ltd.), 17 December, 2002 (17.12.02), Par. Nos. [0039] to [0042] (Family: none) | 2-3 |
| Y | WO 2005/075109 A1 (Hoya Corp.), 18 August, 2005 (18.08.05), Claims 4 to 6; Par. Nos. [0049], [0052] & US 2008/0003356 A1 & EP 1714708 A1 | 2-3 |
| Y | JP 2005-199683 A (Tokuyama Corp.), 28 July, 2005 (28.07.05), Claim 6; Par. No. [0002] & US 2006/0269741 A1 & EP 1602479 A1 & WO 2004/078476 A1 | 15 |
| Y | WO 2004/078476 A1 (Tokuyama Corp.), 16 September, 2004 (16.09.04), Claim 6; page 1, lines 13 to 16 & JP 2004-261973 A & US 2006/0269741 A1 & EP 1602479 A1 | 15 |
| P,Y | WO 2008/001875 A1 (Tokuyama Corp.), 03 January, 2008 (03.01.08), Claims 1, 4; Par. Nos. [0002], [0070] to [0071], [0107] (Family: none) | 1,10-15 |
| A | JP 2005-046694 A (Toshiba Corp.), 24 February, 2005 (24.02.05), Claims 3 to 5, 9 & US 2005/0058775 A1 | 1,6-7 |

Form PCT/ISA/210 (continuation of second sheet) (April 2007)

**INTERNATIONAL SEARCH REPORT**

International application No.
PCT/JP2008/064752

C (Continuation). DOCUMENTS CONSIDERED TO BE RELEVANT

| Category* | Citation of document, with indication, where appropriate, of the relevant passages | Relevant to claim No. |
|---|---|---|
| A | JP 2005-218994 A (Hoya Corp.), 18 August, 2005 (18.08.05), Par. Nos. [0006], [0030] (Family: none) | 1,6,11-12 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007217321 A
- JP 2007249733 A
- JP 5019103 A
- JP 2005218994 A
- JP 2028154 A
- JP 62288830 A
- WO 9422850 A
- WO 9614596 A
- JP 2001114775 A
- JP 2001031670 A
- JP 2001011067 A
- JP 2001011066 A
- JP 2000347346 A
- JP 2000034476 A
- JP 20003044761 A
- JP 2000327676 A
- JP 2000327675 A
- JP 2000256347 A
- JP 2000229976 A
- JP 2000229975 A
- JP 2000229974 A
- JP 2000229973 A
- JP 2000229972 A
- JP 2000219687 A
- JP 2000219686 A
- JP 2000219685 A
- JP 11322739 A
- JP 11286484 A
- JP 11279171 A
- JP 10298176 A
- JP 9218301 A
- JP 9124645 A
- JP 8295690 A
- JP 8176139 A
- JP 8157467 A